(19) Europäisches Patentamt / European Patent Office / Office européen des brevets

(11) **EP 4 224 905 A1**

(12) **EUROPEAN PATENT APPLICATION**
published in accordance with Art. 153(4) EPC

(43) Date of publication:
**09.08.2023  Bulletin 2023/32**

(21) Application number: **20959319.3**

(22) Date of filing: **31.10.2020**

(51) International Patent Classification (IPC):
**H04W 24/00** (2009.01)

(52) Cooperative Patent Classification (CPC):
**H04W 24/00**

(86) International application number:
**PCT/CN2020/125680**

(87) International publication number:
**WO 2022/088158 (05.05.2022 Gazette 2022/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Huawei Technologies Co., Ltd.**
**Shenzhen, Guangdong 518129 (CN)**

(72) Inventors:
• **CAI, Shijie**
 **Shenzhen, Guangdong 518129 (CN)**
• **LIU, Kunpeng**
 **Shenzhen, Guangdong 518129 (CN)**

(74) Representative: **Isarpatent**
**Patent- und Rechtsanwälte Barth**
**Charles Hassa Peckmann & Partner mbB**
**Friedrichstrasse 31**
**80801 München (DE)**

(54) **METHOD AND APPARATUS FOR REPORTING CHANNEL INFORMATION**

(57)  Embodiments of this application disclose a channel information reporting method and an apparatus. The method includes: determining channel information of a first terminal, where the channel information indicates a channel state of a downlink channel between the first terminal and an access network device; and reporting, to the access network device, first information indicating some or all information in first common information in the channel information of the first terminal and channel information of a second terminal, where the channel information of the second terminal indicates a channel state of a downlink channel between the second terminal and the access network device. According to the method, different terminals can jointly report channel information. The solutions of this application may be widely applied to the fields such as communication technologies, artificial intelligence, the Internet of vehicles, and the Internet of smart households.

FIG. 4

EP 4 224 905 A1

**Description**

**TECHNICAL FIELD**

Embodiments of this application relate to the field of communication technologies, and in particular, to a channel information reporting method and an apparatus.

**BACKGROUND**

With development of communication technologies and increasingly high user requirements, there are more terminals and an increasing number of forms of terminals in a communication scenario. For example, in an industrial automation scenario, there are a large quantity of monitoring devices, machines, sensors, or the like in a factory; and in a home and life scenario, there are a large quantity of terminals of various types, such as mobile phones, tablet computers, wearable devices, smart appliances, or vehicle-mounted terminals. A terminal may report channel information of a downlink channel between the terminal and an access network device to the access network device, and the access network device sends a downlink signal or downlink data to the terminal based on the channel information of the downlink channel.

**SUMMARY**

Embodiments of this application provide a channel information reporting method, so that different terminals cooperatively report channel information.

To achieve the foregoing objectives, the following technical solutions are used in embodiments of this application.

According to a first aspect, an embodiment of this application provides a channel information reporting method. The method may be performed by a first terminal, a chip, or another apparatus. The method may include: determining channel information of the first terminal, where the channel information of the first terminal indicates a channel state of a downlink channel between the first terminal and an access network device; and reporting first information to the access network device, where the first information indicates some or all information in first common information in the channel information of the first terminal and channel information of a second terminal, and the channel information of the second terminal indicates a channel state of a downlink channel between the second terminal and the access network device.

Based on the method according to the first aspect, when channel information of a plurality of terminals includes common information (namely, redundant information), one of the plurality of terminals reports some or all information in the common information, so that the plurality of terminals cooperatively/jointly report the channel information, to reduce signaling overheads.

In a possible design, the channel information of the first terminal includes N1 elements, the channel information of the second terminal includes N2 elements, and N1 and N2 are integers greater than or equal to 1. The first common information includes N3 elements, the N3 elements are same elements and/or similar elements in the N1 elements of the first terminal and the N2 elements of the second terminal, the same elements are elements that are in the N1 elements and the N2 elements and that have a same position and a same value, and the similar elements are elements that are in the N1 elements and the N2 elements and that have a same position and a difference less than a threshold.

Based on this possible design, same elements and/or similar elements in channel information of different terminals are used as the common information, to simplify a system design.

In a possible design, the channel information of the first terminal includes R1 pieces of sub-channel information, the channel information of the second terminal includes R2 pieces of sub-channel information, and R1 and R2 are integers greater than or equal to 1. The first common information includes a value of a first position in the R1 pieces of sub-channel information of the first terminal and the R2 pieces of sub-channel information of the second terminal. Optionally, the first position may be determined and indicated to the first terminal by the access network device, or may be determined and indicated to the access network device by the first terminal, or may be set in a protocol agreement. A value of a first position in the first terminal is the same as or similar to a value of a first position in the second terminal.

Based on this possible design, values of same positions in channel information of different terminals are used as the common information, to simplify the system design.

In a possible design, that the first information indicates some or all information in first common information in the channel information of the first terminal and channel information of a second terminal includes: the first information includes the some or all information in the first common information; the first information includes quantized bits obtained by quantizing the some or all information; the first information includes some or all bits in quantized bits obtained by quantizing all the information; the first information indicates a relationship value between the first common information and reference information; the first information indicates a relationship value between some information in the first common information and some information in reference information; or the first information includes a relationship value between a first part of bits and a second part of bits, the first part of bits are some bits in quantized bits obtained by quantizing the first common information, and the second part of bits are some bits in quantized bits obtained by quantizing the reference information, where the reference information is channel information of a third terminal, and the channel information of the third terminal indicates a channel state of a downlink channel between the third terminal and the access network device.

Based on the possible design, some or all information in the first common information may be effectively and flexibly indicated.

In a possible design, the method further includes: receiving first indication information, where the first indication information indicates one or more of the following: a position of the first common information in the channel information of the first terminal, a position of some information in the first common information, a quantization manner of the some information, a quantization manner of the first common information, a position of some bits in quantized bits obtained by quantizing the first common information, and information about the third terminal.

Based on the possible design, which part of information in the channel information is common information, which part of information in the common information is reported, a quantization manner during reporting, and the like may be determined under indication of the first indication information, to simplify the system design.

In a possible design, the method further includes: reporting second information to the access network device, where the second information is specific information in the channel information of the first terminal. Based on the possible design, the specific information of the terminal may be separately reported to the access network device, so that the access network device restores complete channel information of the terminal based on the specific information of the terminal and common information that is reported by the terminal in cooperation with another terminal, to simplify the system design.

In a possible design, the channel information of the first terminal includes the $R1$ pieces of sub-channel information, $R1$ is an integer greater than or equal to 1, the second information includes $R$ pieces of fourth information and third information that indicates all or some information in second common information in the channel information of the first terminal, the second common information is common information of the $R1$ pieces of sub-channel information, the $R$ pieces of fourth information correspond to $R$ pieces of sub-channel information in the $R1$ pieces of sub-channel information, the fourth information indicates specific information in sub-channel information corresponding to the fourth information, and $R$ is an integer greater than or equal to 0 and less than or equal to $R1$.

Based on the possible design, when the specific information of the terminal is reported, one piece of common information of the terminal is reported to the access network device, and one piece of specific information in different pieces of sub-channel information of the terminal is fed back for each piece of specific information of the sub-channel information. In this way, signaling overheads can be reduced by reducing a quantity of pieces of reported common information of the terminal.

It is to be noted that, in the possible design, a manner in which the terminal reports the specific information may be independently performed without depending on reporting of common information by a plurality of terminals cooperatively. In other words, the possible design may be independently performed as a specific embodiment.

In a possible design, the second common information includes a value of an element at a second position in the $R1$ pieces sub-channel information; and/or the second common information is a first part of information in the first common information, and the first part of information is same and/or similar information in the $R1$ pieces of sub-channel information.

Based on the possible design, the value of the element at the second position in the $R1$ pieces sub-channel information, or information that is in the common information reported by the plurality of terminals cooperatively and that belongs to specific information of the first terminal and belongs to the same and/or similar information in the $R1$ pieces of sub-channel information is used as the common information, to simplify the system design.

In a possible design, the method further includes: receiving second indication information that indicates a compression parameter of a first compressor, where the first compressor is configured to compress the first information. Based on the possible design, the compression parameter of the compressor configured to compress the first information may be indicated to the first terminal, so that the first terminal determines the compression processing manner of the first information based on the indication, to reduce signaling overheads during information reporting.

In a possible design, the method further includes: receiving third indication information, where the third indication information indicates the third terminal to join a terminal group, and the terminal group includes the first terminal and the second terminal. Based on the possible design, information of a newly joined terminal may be indicated to the first terminal, so that the first terminal adjusts a manner of reporting the common information after learning that the new terminal joins the terminal group, so that a designed system is more flexible.

In a possible design, the method further includes: receiving fourth indication information, where the fourth indication information indicates a fourth terminal to exit a terminal group. Based on the possible design, information of the terminal that exits the terminal group may be indicated to the first terminal, so that the first terminal adjusts a manner of reporting the common information after learning that the terminal exits the terminal group, so that the designed system is more flexible.

In a possible design, before the first terminal joins the terminal group, the method further includes: receiving fifth indication information, where the fifth indication information indicates an existing terminal in the terminal group. Based on the possible design, before joining the terminal group, an existing terminal in the terminal group may be learned, so that a newly joined terminal exchanges information with the existing terminal, so that the designed system is more flexible.

According to a second aspect, this application provides a communication apparatus. The communication apparatus may be a first terminal, or a chip or a system-on-chip in the first terminal, or may be a module or unit that is in the first terminal and that is configured to implement the channel information reporting method in embodiments of this application, or may be another module or unit that can implement the method on a first terminal side. The communication apparatus may implement a function performed by the first terminal in the first aspect or the possible designs. The function may be implemented by hardware, or may be implemented by hardware executing corresponding software. The hardware or the software includes one or more modules corresponding to the foregoing function. In a design, the communication apparatus may include modules that are in a one-to-one correspondence with the methods/operations/steps/actions described in the first aspect. The modules may be hardware circuits or software, or may be implemented by a combination of the hardware circuits and the software. In a design, the communication apparatus may include a processing unit and a sending unit.

The processing unit is configured to determine channel information of a first terminal, where the channel information of the first terminal indicates a channel state of a downlink channel between the first terminal and an access network device.

The sending unit is configured to report first information to the access network device, where the first information indicates some or all information in first common information in the channel information of the first terminal and channel information of a second terminal, and the channel information of the second terminal indicates a channel state of a downlink channel between the second terminal and the access network device.

For related descriptions of the first common information and the first information, refer to the descriptions in the first aspect or the possible designs of the first aspect. Details are not described again.

For a specific implementation of the communication apparatus, refer to behavior and functions of the first terminal in the channel information reporting method provided in any one of the first aspect or the possible designs of the first aspect. Details are not described herein again.

According to a third aspect, a communication apparatus is provided. The communication apparatus may be a first terminal, or a chip or a system-on-chip in the first terminal, or may be another module or unit that can implement the method on a first terminal side. The communication apparatus may implement functions performed by the first terminal in the first aspect or the possible designs, and the functions may be implemented by hardware. In a possible design, the communication apparatus may include a processor and a communication interface. The processor and the communication interface may be configured to support the communication apparatus in implementing the function according to any one of the first aspect or the possible designs of the first aspect. In another possible design, the communication apparatus may further include a memory, and the memory is configured to store computer instructions and/or data. When the communication apparatus runs, the processor executes computer instructions stored in the memory, to enable the communication apparatus to perform the channel information reporting method according to any one of the first aspect or the possible designs of the first aspect. In embodiments of this application, the communication interface may be a transceiver, an interface circuit, a bus interface, a pin, or another apparatus that can implement a transceiver function.

According to a fourth aspect, a computer-readable storage medium is provided. The computer-readable storage medium stores instructions. When the instructions are run on a computer, the computer is enabled to perform the channel information reporting method according to any one of the first aspect or the possible designs of the first aspect.

According to a fifth aspect, a computer program product including instructions is provided. The computer program product stores program instructions. When the program instructions are run on a computer, the computer is enabled to perform the channel information reporting method according to any one of the first aspect or the possible designs of the first aspect.

According to a sixth aspect, a chip system is provided. The chip system includes a processor and a communication interface. The chip system may be configured to implement the function performed by the first terminal in any one of the first aspect or the possible designs of the first aspect. In a possible design, the chip system further includes a memory. The memory is configured to store program instructions. When the chip system runs, the processor executes the program instructions stored in the memory, to enable the chip system to perform the channel information reporting method according to any one of the first aspect or the possible designs of the first aspect. The chip system may include a chip, or may include a chip and another discrete component. This is not limited.

According to a seventh aspect, an embodiment of this application further provides a channel information reporting method. The channel information reporting method may be performed by an access network device, a chip, or another apparatus. The method may include: receiving first information from a first terminal, and determining first common information based on the first information. The first information indicates some or all information in the first common information in channel information of the first terminal and channel information of a second terminal, the channel information of the first terminal indicates a channel state of a downlink channel between the first terminal and an access network device, and the channel information of the second terminal indicates a channel state of a downlink channel between the second terminal and the access network device.

For related descriptions of the first common information and the first information, refer to the descriptions in the first aspect or the possible designs of the first aspect. Details are not described again.

In a possible design, the method further includes: receiving second information from the first terminal, where the second information is specific information in the channel information of the first terminal; and determining the channel information of the first terminal based on the first common information and the second information. For related descriptions of the second information, refer to the descriptions in the first aspect or the possible designs of the first aspect. Details are not described again.

In a possible design, the method further includes: sending second indication information to the first terminal, where the second indication information indicates a compression parameter of a first compressor, and the first compressor is configured to compress the first information.

In a possible design, the method further includes: sending third indication information to the first terminal, where the third indication information indicates a third terminal to join a terminal group, and the terminal group includes the first terminal and the second terminal.

In a possible design, the method further includes: sending fourth indication information to the first terminal, where the fourth indication information indicates a fourth terminal to exit a terminal group.

In a possible design, before the first terminal joins the terminal group, the method further includes: sending fifth indication information to the first terminal, where the fifth indication information indicates an existing terminal in the terminal group.

According to an eighth aspect, this application provides a communication apparatus. The communication apparatus may be an access network device, or a chip or a system-on-chip in the access network device, or may be a module or unit that is in the access network device and that is configured to implement the channel information reporting method in embodiments of this application, or may be another module or unit that can implement the method on an access network side. The communication apparatus may implement functions performed by the access network device in the seventh aspect or the possible designs in the seventh aspect, and the functions may be implemented by hardware, or may be implemented by hardware executing corresponding software. The hardware or the software includes one or more modules corresponding to the foregoing function. In a design, the communication apparatus may include modules that are in a one-to-one correspondence with the methods/operations/steps/actions described in the seventh aspect. The modules may be hardware circuits or software, or may be implemented by a combination of the hardware circuits and the software. In a design, the communication apparatus may include a receiving unit and a processing unit.

The receiving unit is configured to receive first information from a first terminal, where the first information indicates some or all information in first common information in channel information of the first terminal and channel information of a second terminal, the channel information of the first terminal indicates a channel state of a downlink channel between the first terminal and the access network device, and the channel information of the second terminal indicates a channel state of a downlink channel between the second terminal and the access network device.

The processing unit is configured to determine first common information in the channel information of the first terminal based on the first information.

For a specific implementation of the communication apparatus, refer to behavior and functions of the access network device in the channel information reporting method provided in any one of the seventh aspect or the possible designs of the seventh aspect. Details are not described herein again.

According to a ninth aspect, a communication apparatus is provided. The communication apparatus may be an access network device, or a chip or a system-on-chip in the access network device, or may be another module or unit that can implement the method on an access network side. The communication apparatus may implement functions performed by the access network device in the seventh aspect or the possible designs in the seventh aspect, and the functions may be implemented by hardware. In a possible design, the communication apparatus may include a processor and a communication interface. The processor and the communication interface may be configured to support the communication apparatus in implementing the function according to any one of the seventh aspect or the possible designs of the seventh aspect. In another possible design, the communication apparatus may further include a memory, and the memory is configured to store computer instructions and/or data. When the communication apparatus runs, the processor executes computer instructions stored in the memory, to enable the communication apparatus to perform the channel information reporting method according to any one of the seventh aspect or the possible designs of the seventh aspect.

According to a tenth aspect, a computer-readable storage medium is provided. The computer-readable storage medium stores instructions. When the instructions are run on a computer, the computer is enabled to perform the channel information reporting method according to any one of the seventh aspect or the possible designs of the seventh aspect.

According to an eleventh aspect, a computer program product including instructions is provided. The computer program product stores program instructions. When the program instructions are run on a computer, the computer is enabled to perform the channel information reporting method according to any one of the seventh aspect or the possible designs of the seventh aspect.

According to a twelfth aspect, a chip system is provided. The chip system includes a processor and a communication interface. The chip system may be configured to implement the function performed by the access network device in any one of the seventh aspect or the possible designs of the seventh aspect. In a possible design, the chip system further includes a memory. The memory is configured to store program instructions and/or data. When the chip system runs, the processor executes the program instructions stored in the memory, to enable the chip system to perform the channel information reporting method according to any one of the seventh aspect or the possible designs of the seventh aspect. The chip system may include a chip, or may include a chip and another discrete component. This is not limited.

According to a thirteenth aspect, an embodiment of this application further provides a communication system. The communication system includes the communication apparatus according to the second aspect or the third aspect, and the communication apparatus according to the eighth aspect or the ninth aspect.

## BRIEF DESCRIPTION OF DRAWINGS

FIG. 1a is a schematic diagram of a three-dimensional signal space according to an embodiment of this application;
FIG. 1b is a schematic diagram of transmitting a beamformed (beamformed) CSI-RS by an access network device according to an embodiment of this application;
FIG. 2 is a simplified schematic diagram of a communication system according to an embodiment of this application;
FIG. 2a is a schematic diagram of transmit and receive antennas between an access network device and a terminal according to an embodiment of this application;
FIG. 3 is a schematic diagram of a structure of a communication apparatus according to an embodiment of this application;
FIG. 4 is a flowchart of a channel information reporting method according to an embodiment of this application;
FIG. 5a is a schematic diagram of reporting channel information by (N-1) terminals cooperatively according to an embodiment of this application;
FIG. 5b is a schematic diagram of reporting channel information by N terminals cooperatively according to an embodiment of this application;
FIG. 5c is a schematic diagram of reporting channel information by N terminals cooperatively according to an embodiment of this application;
FIG. 5d is a schematic diagram of reporting channel information by N terminals cooperatively according to an embodiment of this application;
FIG. 5e is a schematic diagram of reporting channel information by (N-1) terminals cooperatively according to an embodiment of this application;
FIG. 6a is a schematic diagram of reporting channel information by (N-1) terminals cooperatively according to an embodiment of this application;
FIG. 6b is a schematic diagram of reporting channel information by N terminals cooperatively according to an embodiment of this application;
FIG. 7 is a flowchart of another channel information reporting method according to an embodiment of this application;
FIG. 8a is a schematic diagram of a beamformed CSI-RS of a terminal including a plurality of antennas according to an embodiment of this application;
FIG. 8b is a schematic diagram of reporting channel information by a plurality of antennas of a terminal cooperatively according to an embodiment of this application;
FIG. 8c is a schematic diagram of beamformed CSI-RSs of a plurality of terminals according to an embodiment of this application;
FIG. 8d is a schematic diagram of reporting channel information by a plurality of terminals cooperatively according to an embodiment of this application;
FIG. 9 is a schematic diagram of a structure of a communication apparatus 90 according to an embodiment of this application;
FIG. 10 is a schematic diagram of a structure of a communication apparatus 100 according to an embodiment of this application; and
FIG. 11 is a schematic diagram of a structure of a communication system according to an embodiment of this application.

**DESCRIPTION OF EMBODIMENTS**

In a long term evolution (long term evolution, LTE) system and a new radio (new radio, NR) system, a multiple-input multiple-output (multiple-input multiple-output, MIMO) technology is widely used. When a sending device and a receiving device support the MIMO technology, for a receiving device at a cell edge, the sending device may send a signal to the receiving device in a space frequency block code (space frequency block code, SFBC) transmission mode, to improve a cell edge signal-to-noise ratio. In addition, the sending device may alternatively send a signal to the receiving device by using a precoding (precoding) technology, to improve signal transmission quality or a signal transmission rate. Embodiments of this application relates to related descriptions of the precoding technology.

Precoding (precoding) technology: When a sending device sends a signal, and when all or some channel states of a channel from the sending device (for example, an access network device) to a receiving device (for example, a terminal) are known, the sending device performs precoding on a to-be-sent signal by using a precoding matrix that matches a channel state of the channel. By using this technology, a precoded signal is adapted to a channel through which the signal is to pass, so that complexity of eliminating inter-channel impact by the receiving device can be reduced, received signal quality (for example, a signal to interference plus noise ratio (signal to interference plus noise ratio, SINR)) is improved, and signal transmission quality or a signal transmission rate is improved. The precoding technology can implement signal transmission between a sending device (for example, an access network device) and a plurality of receiving devices (for example, terminals) on a same time-frequency resource, to implement multi-user multiple-input multiple-output (multi-user multiple-input multiple-output, MU-MIMO).

Optionally, the sending device learns of, based on channel information reported by the receiving device, the all or some channel states of the channel from the sending device to the receiving device. In a single-user scenario, the sending device may receive channel information reported by one receiving device. In a MU-MIMO scenario, the sending device may receive channel information separately reported by a plurality of receiving device. For a plurality of receiving devices whose physical locations are close, there may be same and/or similar information, namely, information redundancy, in reported channel information. If the plurality of receiving devices separately report channel information of a channel corresponding to the receiving device, a waste of transmission resources is caused. In embodiments of this application, "a plurality of" may be two, three, four, or more. This is not limited.

To resolve the waste of transmission resources, an embodiment of this application provides a channel information reporting method, including: A first receiving device determines channel information of the first receiving device, and reports first information to a sending device, where the first information indicates some or all information in first common information in the channel information of the first receiving device and channel information of a second receiving device. To be specific, for common information in channel information of a plurality of receiving devices, some receiving devices may report all information in the common information, or different receiving devices may report different parts of the common information, so that the receiving devices cooperatively report the common information, to reduce signaling overheads during channel information reporting.

The sending device and the receiving device are for a downlink signal, for example, a downlink data channel and/or a downlink control channel. It may be understood that, for an uplink signal fed back by the receiving device to the sending device, roles of the receiving device and the sending device are interchanged. To be specific, the receiving device for the downlink signal is the sending device for the uplink signal, and the sending device for the downlink signal is the receiving device for the uplink signal. A similar case is not described in the following. When the sending device and the receiving device are for the downlink signal, a channel from the sending device to the receiving device may be referred to as a downlink channel. When the sending device and the receiving device are for the uplink signal, a channel from the sending device to the receiving device may be referred to as an uplink channel.

The sending device may include one or more antennas. An antenna included in the sending device may be referred to as a sending antenna, that is, the sending antenna represents an antenna on a sending device side. The sending antenna may be a one-dimensional antenna array, or may be a two-dimensional antenna array. In this embodiment of this application, an example in which the sending antenna is a two-dimensional antenna array is used. A similar case is not described in the following. The sending antenna may also be referred to as a transmit antenna. Each sending antenna includes one or two polarization directions.

In this embodiment of this application, $N_t$ represents a quantity of sending antenna ports (or referred to as a quantity of sending ports or a quantity of ports) on a sending device side in a non-beamformed (non-beamformed) scenario. The quantity of sending antenna ports is determined based on the quantity of sending antennas and a quantity of polarization directions of the sending antennas. If the sending antenna includes two polarization directions (that is, dual polarization), $N_t = 2N_1 * N_2$, and $N_1$ and $N_2$ are respectively a quantity of first-dimensional antenna ports (or a quantity of horizontal antenna ports) and a quantity of second-dimensional antenna ports (or a quantity of vertical antenna ports) of the two-dimensional antenna array of the sending antenna, and multiplying by 2 is because there are two polarization directions. If the sending antenna includes one polarization direction, $N_t = N_1 * N_2$. $N_1$ and $N_2$ are integers greater than or equal to 1, and values of $N_1$ and $N_2$ may be the same or different. This is not limited. When a value of one of $N_1$ and $N_2$ is 1, for example, $N_1$ is equal to 1, and $N_2$ is greater than 1, the sending antenna may further be considered as a one-dimensional antenna array. In this embodiment of this application, in a non-beamformed scenario, an antenna port may be referred to as an antenna for short, and a quantity of antenna ports may be referred to as an antenna quantity for short. One antenna port may correspond to one or more logical antennas on an antenna panel. One logical antenna may be obtained by using a plurality of antenna elements driven by one logical antenna, or one logical antenna may correspond to one antenna element. In a beamformed scenario, a quantity of sending antenna ports on a sending device side may be preconfigured, one antenna port corresponds to one spatial domain vector, and the sending device side may send a precoded CSI-RS on a preconfigured antenna port. A concept of the spatial domain vector is described as follows.

The receiving device may include one or more antennas. An antenna included in the receiving device may be referred to as a receive antenna, that is, the receive antenna represents an antenna on a receiving device side. A similar case is not described in the following. In this embodiment of this application, $N_{Rx}$ represents a quantity of receive antennas. The receiving device may receive a downlink signal by using $N_{Rx}$ receive antennas. Alternatively, the receiving device may receive a downlink signal by using a spatial layer (or a layer for short) as a granularity. One spatial layer may be considered as a data stream that can be independently transmitted. The spatial layer may be obtained by performing weighting processing on $N_t$ sending antenna ports, and in this specification, $N_{Layer}$ represents a quantity of spatial layers.

In this embodiment of this application, a frequency resource for transmitting the downlink signal between the sending device and the receiving device includes one or more frequency domain units. In this specification, $N_f$ represents a quantity of frequency domain units. A length (or referred to as a width or a frequency domain resource granularity) of the frequency domain unit may be preset based on a requirement. For example, the frequency domain unit may be any frequency domain resource granularity of a subband (subband), a resource block (resource block, RB), a subcarrier, a resource block group (resource block group, RBG), or a precoding resource block group (precoding resource block group, PRG). Optionally, one subband may be R times of one channel quality indication (channel quality indication, CQI) subband, where R is greater than 0 and less than or equal to 1. For example, a value of R may be, for example, 1 or

$$\frac{1}{2}$$

. The value of R may be preconfigured by the sending device for the receiving device by using signaling. One RBG group or one PRG group includes one or more RBs, for example, four, six, or another quantity. This is not limited.

For example, a channel from the sending device to the receiving device is a downlink channel. Channel information that is of the channel from the sending device to the receiving device and that is reported by the receiving device may include any one of the following manner (1), manner (2), and manner (3).

Manner (1): The channel information includes a channel matrix or a precoding matrix.

The channel matrix may represent a channel state of a three-dimensional signal space "sending antenna-receive antenna-frequency domain unit". The channel matrix of the channel from the sending device to the receiving device may include space-frequency matrices corresponding to $N_{Rx}$ receive antennas of the receiving device, and one receive antenna corresponds to one space-frequency matrix.

The precoding matrix may represent a channel state of a three-dimensional signal space "sending antenna-layer (layer)-frequency domain unit". The precoding matrix of the channel from the sending device to the receiving device may include space-frequency matrices corresponding to $N_{Layer}$ spatial layers of the receiving device, and one spatial layer corresponds to one space-frequency matrix.

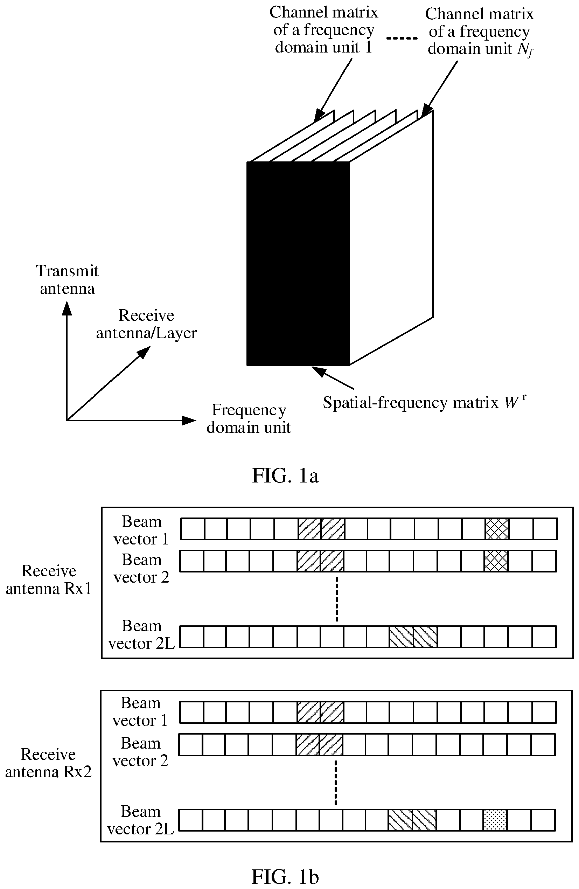

In this embodiment of this application, as shown in FIG. 1a, $W^r$ represents a space-frequency matrix, if $r = 1, ..., N_{Layer}$, $W^r$ represents a space-frequency matrix corresponding to one spatial layer; or if $r = 1, ..., N_{Rx}$, $W^r$ represents a space-frequency matrix corresponding to one receive antenna. The space-frequency matrix $W^r$ may be considered as a joint matrix formed by combining $N_f$ channel vectors (or referred to as vectors for short) that are in a one-to-one correspondence with $N_f$ frequency domain units. For example, the space-frequency matrix $W^r$ may include $N_f$ vectors, the $N_f$ vectors are in a one-to-one correspondence with $N_f$ frequency domain units, one vector indicates a channel state of a channel corresponding to one frequency domain unit, and a length of the vector is $N_t$.

$N_f$ vectors may be arranged in a format of a column vector in $W^r$, or may be arranged in a format of a row vector in $W^r$. By using an example in which $N_f$ vectors are arranged in a format of a column vector in the space-frequency matrix, $W^r = [w_0, w_1, ... , w_{N_f}]$. By using an example in which $N_f$ vectors are arranged in a format of a row vector in the

$$W^{\mathrm{r}} = \begin{bmatrix} \mathrm{w}_0 \\ \mathrm{w}_1 \\ \vdots \\ \mathrm{w}_{N_f} \end{bmatrix} . \quad \mathrm{w}_0, \mathrm{w}_1, \cdots, \mathrm{w}_{N_f}$$

space-frequency matrix, are the $N_f$ column vectors that are in a one-to-one correspondence with the $N_f$ frequency domain units.

In an example, in a beamformed scenario, the sending device may map a channel state information-reference signal (channel state information-reference signal, CSI-RS) to $N_f$ frequency domain units, and send the CSI-RS to the receiving device by using $N_t$ sending ports. The receiving device receives the CSI-RS by using $N_{Rx}$ receive antennas, performs channel estimation on the received CSI-RS to obtain a space-frequency matrix corresponding to each receive antenna, and uses the method described in this embodiment of this application to cooperate with another receiving device to include the space-frequency matrix corresponding to each receive antenna in channel information and report the channel information to the sending device. Further, the sending device receives the channel information reported by the receiving device, restores, based on the channel information, the space-frequency matrix corresponding to each receive antenna of the receiving device, determines, based on the space-frequency matrix corresponding to each receive antenna, a channel matrix corresponding to each frequency domain unit, determines, based on the channel matrix corresponding to each frequency domain unit, a precoding matrix corresponding to the frequency domain unit, and precodes, based on the precoding matrix corresponding to the frequency domain unit, a downlink signal transmitted by using the frequency domain unit.

The determining, based on the channel matrix corresponding to each frequency domain unit, a precoding matrix corresponding to the frequency domain unit may include: obtaining the precoding matrix corresponding to the frequency domain unit by performing singular value decomposition (singular value decomposition, SVD) on the channel matrix; or obtaining the precoding matrix corresponding to the frequency domain unit by performing eigenvalue decomposition (eigenvalue decomposition, EVD) on a covariance matrix of the channel matrix.

In another example, in a non-beamformed scenario, the sending device may precode the CSI-RS, map the precoded CSI-RS to $N_f$ frequency domain units, and send the precoded CSI-RS to the receiving device by using a preconfigured antenna port. The receiving device receives, on the receive antenna corresponding to the receiving device, the CSI-RS sent by the sending device, performs channel estimation on the received CSI-RS to obtain a space-frequency matrix corresponding to each spatial layer, and uses the method described in this embodiment of this application to cooperate with another receiving device to include the space-frequency matrix corresponding to each spatial layer in channel information and report the channel information to the sending device.

Further, the sending device receives the channel information reported by the receiving device, restores, based on the channel information, the space-frequency matrix corresponding to each spatial layer of the receiving device, determines, based on the space-frequency matrix corresponding to each spatial layer, a precoding matrix corresponding to each frequency domain unit, and precodes, based on the precoding matrix corresponding to each frequency domain unit, a downlink signal transmitted by using the frequency domain unit. A specific use form of the precoding matrix is not limited in this embodiment of this application. The precoding matrix may be directly used by an access network device to send a downlink signal, or processing such as beamforming may be performed on the precoding matrix, to obtain a precoding matrix for sending send a downlink signal. Beamforming may include zero forcing (zero forcing, ZF), regularized zero-forcing (regularized zero-forcing, RZF), a minimum mean square error (minimum mean-squared error, MMSE), or a maximum signal-to-leakage-and-noise ratio (signal-to-leakage-and-noise, SLNR).

Vectors corresponding to a same frequency domain unit in space-frequency matrices corresponding to $N_{Rx}$ receive antennas may be combined to obtain a channel matrix corresponding to the frequency domain unit. Vectors corresponding to a same frequency domain unit in space-frequency matrices corresponding to $N_{Layer}$ spatial layer may be combined to obtain a precoding matrix corresponding to the frequency domain unit. In other words, it may be understood as that the space-frequency matrix is an intermediate quantity for determining the precoding matrix or the channel matrix corresponding to the frequency domain unit.

It should be understood that, this application is not limited to a form of combining $N_f$ vectors into a space-frequency matrix. Alternatively, the $N_f$ vectors may be arranged in a first-digit joint manner in a one-dimensional vector with a length of $N_f * N_t$, or may be arranged into $N_f$ vectors according to another predefined rule. This is not limited.

It should be understood that, that the channel information includes the channel matrix may include that: space-frequency matrices corresponding to $N_{Rx}$ receive antennas are carried in $N_{Rx}$ arrays in the channel information in a one-to-one correspondence, or elements included in space-frequency matrices corresponding to all receive antennas are carried in a same array in the channel information. That the channel information includes the precoding matrix may include that: space-frequency matrices corresponding to $N_{Layer}$ receive antennas are carried in $N_{Layer}$ arrays in the channel information in a one-to-one correspondence, or elements included in space-frequency matrices corresponding to all receive antennas are carried in a same array in the channel information. A specific carrying manner to be used may be pre-agreed on by the receiving device and the sending device or may be specified in a protocol. This is not limited.

Manner (2): The channel information includes information about some or all non-zero combination coefficients in a combination coefficient matrix obtained by performing dual-domain compression on the space-frequency matrix $W^r$.

The information about the non-zero combination coefficient includes one or more of the following: a value of the non-zero combination coefficient, position information, and indexes of a frequency domain vector and a spatial domain vector that are corresponding to the non-zero combination coefficient and that are for constituting a space-frequency component matrix.

The space-frequency matrix $W^r$ may be obtained based on a weighted sum of a plurality of space-frequency component matrices. The space-frequency component matrix may be constituted by a spatial domain vector and a frequency domain vector. For example, the space-frequency component matrix may be obtained by multiplying a conjugate transposition of the spatial domain vector by a conjugate transposition of the frequency domain vector. The spatial domain vector may be included in a preconfigured spatial domain vector set, and the frequency domain vector may be included in a preconfigured frequency domain vector set. Therefore, the sending device can restore the space-frequency matrix $W^r$ provided that the sending device learns the weighted value (or referred to as a weight) of the space-frequency component matrix and the spatial domain vector and the frequency domain vector that constitute the space-frequency component matrix.

In view of this, to reduce signaling overheads caused by reporting the channel information by the receiving device, the receiving device may process the space-frequency matrix $W^r$ in a dual-domain compression manner shown in the following formula (1), include, in the channel information, a combination coefficient in the processed combination coefficient matrix and indexes of the frequency domain vector and the spatial domain vector that constitute the space-frequency component matrix, and report the channel information to the sending device in cooperation with another receiving device, to reduce signaling overheads.

$$W^r = W_{N_t}^r \times \widetilde{W}^r \times (W_{N_f}^r)^H \quad \text{Formula (1)}$$

In the formula (1), $r = 1, \dots, N_{Layer}$, or $r = 1, \dots, N_{Rx}$.

In the formula (1), $W_{N_t}^r$ represents a spatial domain vector matrix, $W_{N_t}^r$ includes L spatial domain vectors that constitute the space-frequency component matrix, and a length of the spatial domain vector is N1*N2. In other words, when the sending antenna is a single-polarized antenna, the length of the spatial domain vector may be a quantity of sending antenna ports $N_t$; when the sending antenna is a dual-polarized antenna, the length of the spatial domain vector may be a quantity of sending antenna ports $\frac{N_t}{2}$, where L is an integer greater than or equal to 1. L spatial domain vectors may be referred to as L bases, and the L bases are respectively $b_{N_t,0}^r$, $b_{N_t,1}^r$, ..., and $b_{N_t,L-1}^r$. The L bases are arranged as a diagonal block matrix $W_{N_t}^r$ in the following order:

$$W_{N_t}^r = \begin{bmatrix} b_{N_t,0}^r & b_{N_t,1}^r & \cdots & b_{N_t,L-1}^r & 0 & 0 & \cdots & 0 \\ 0 & 0 & \cdots & 0 & b_{N_t,0}^r & b_{N_t,1}^r & \cdots & b_{N_t,L-1}^r \end{bmatrix}$$

A name of the spatial domain vector (spatial domain vector) is not limited in this embodiment of this application. The spatial domain vector may be referred to as a spatial domain component vector, a beam (beam) vector, a spatial domain beam base vector, a spatial domain base vector, or the like. One spatial domain vector includes a plurality of elements, one element in the spatial domain vector uniquely corresponds to one antenna port (antenna port) on a sending device side, and each element in the spatial domain vector may represent a weight of each antenna port on the sending device side. As described above, in the non-beamformed scenario, if the sending antenna on the sending device side is a two-dimensional antenna array, the antenna port of the sending device is determined based on the first-dimensional antenna port, the second-dimensional antenna port, and the antenna polarization manner. In the beamformed scenario, the antenna port on the sending device side is preset.

In an example, the L spatial domain vectors may be selected from a candidate spatial domain vector set. The candidate spatial domain vector set may include one or more candidate spatial domain vectors (or spatial domain components), and lengths of candidate spatial domain components included in the candidate spatial domain vector set may be the same or different. The candidate spatial domain vector set may be referred to as a candidate spatial domain component vector set, a spatial domain component vector set, a candidate spatial domain base vector set, a spatial domain base vector set, a candidate beam vector set, a beam vector set, a candidate spatial domain beam base vector set, a spatial domain beam base vector set, or the like. The candidate spatial domain vector set may be preconfigured for the sending device and the receiving device. Optionally, an index value (or referred to as an index) identifies a candidate spatial domain component in the candidate spatial domain vector set, and index values of different candidate spatial domain components are different.

In another example, the L spatial domain vectors are agreed on in a protocol, or are configured by the sending device for the receiving device in advance. For example, the method may be used in the beamformed scenario.

The spatial domain vector may be a discrete Fourier transform (discrete fourier transform, DFT) vector, a conjugate transpose vector of a DFT vector, or an oversampled DFT vector. The DFT vector may be a vector in a DFT matrix. The DFT matrix may be an orthogonal DFT matrix or a two-dimensional (2-dimensional, 2D) DFT defined in a type II (type II) codebook in the new radio (new radio, NR) protocol TS 38.214 (for example, Release 15 (release 15, R15) or another release). The conjugate transpose vector of the DFT vector may be a vector in a conjugate transpose matrix of the DFT matrix. The oversampled DFT vector may be a vector in an oversampled DFT matrix.

For example, the sendinvg antenna is a dual-polarized antenna, and the orthogonal DFT matrix may be $B_1 =$ kron$(R_{N_1}(q_1)D_{N_1}, R_{N_2}(q_2)D_{N_2})$, and $B_1$ is an orthogonal DFT matrix of $\frac{N_t}{2} * \frac{N_t}{2}$. A function kron(A, B) represents multiplying an element $a_{i,j}$ in a matrix A by a matrix B (which is equivalent to multiplying each element in the matrix B by $a_{i,j}$), and placing a matrix obtained through multiplication in a position of the element $a_{i,j}$. Similarly, the foregoing operation is performed on each element in the matrix A until positions of all elements in the matrix A are replaced by the matrix obtained through multiplication, and finally, the obtained matrix is used as an output result of the function kron(A, B). $D_{N_1}$ is an orthogonal DFT matrix of N1*N1, $D_{N_2}$ is an orthogonal DFT matrix of N2*N2, an element in an $m^{th}$ row and an $n^{th}$ column of $D_{N_1}$ or $D_{N_2}$ is $[\mathbf{D_N}]_{m,n} = \frac{1}{\sqrt{N}} e^{\frac{j2\pi mn}{N}}$, $R_N(q) = \text{diag}([e^{j2\pi \cdot 0 \cdot \frac{q}{N}} \quad e^{j2\pi \cdot 1 \cdot \frac{q}{N}} \quad \cdots \quad e^{j2\pi \cdot (N-1) \cdot \frac{q}{N}}])$ represents a rotation matrix of N*N , and $q$ is a rotation factor. It is assumed that the rotation factor $q$ is evenly distributed, then $q_1 = \frac{i}{O_1}$, where $i=0,1,\cdots,O_1-1$, and $q_2 = \frac{i}{O_2}$, where $i=0,1,\cdots,O_2-1$. A matrix formed by a product of the rotation matrix and the DFT orthogonal matrix satisfies $[\mathbf{R_N}(q)\mathbf{D_N}]_{m,n} = \frac{1}{\sqrt{N}} e^{\frac{j2\pi m(n+q)}{N}}$, where $0 \leq q < 1$. N = orN2, and $N1 * N2 = \frac{N_t}{2}$. L vectors may be selected from the $\frac{N_t}{2}$ vectors in the orthogonal DFT matrix $B_1$ as the L spatial domain vectors.

In the formula (1), $W_{N_f}^r$ is a frequency domain vector matrix, and includes K frequency domain vectors for constituting a frequency domain component matrix, and K is an integer greater than or equal to 1. $(W_{N_f}^r)^H$ is a matrix obtained by transposing the frequency domain vector matrix. A length of the frequency domain vector may be a quantity of frequency domain units $N_f$, the K frequency domain vectors may be referred to as K bases, the K bases are $b_{N_f,0}^r$, $b_{N_f,1}^r$, ... , and $b_{N_f,K-1}^r$, and $W_{N_f}^r$ is obtained by arranging the K bases in the following sequence:

$$W_{N_f}^r = \begin{bmatrix} b_{N_f,0}^r & b_{N_f,1}^r & \cdots & b_{N_f,K-1}^r \end{bmatrix}$$

The frequency domain vector (frequency domain vector) may be referred to as a frequency domain component vector, a frequency domain base vector, or the like, and may represent a vector of a change rule of a channel in frequency domain. Each frequency domain vector may represent one change rule. When a signal is transmitted through a radio channel, the signal may be transmitted from a sending antenna to a receive antenna through a plurality of paths. A multipath delay results in frequency selective fading, and this causes the change of the channel in frequency domain. Therefore, different frequency domain vectors may represent change rules of channels in frequency domain caused by delays on different transmission paths.

In an example, the K frequency domain vectors may be selected from a candidate frequency domain vector set. The candidate frequency domain vector set may include one or more candidate frequency domain vectors (or frequency domain components), and lengths of candidate frequency domain components included in the candidate frequency domain vector set may be the same or different. The candidate frequency domain vector set may be referred to as a candidate frequency domain component vector set, a frequency domain component vector set, a frequency domain base vector set, a frequency domain vector set, or the like. The candidate frequency domain vector set may be preconfigured for the sending device and the receiving device. Optionally, an index value identifies a candidate frequency domain component in the candidate frequency domain vector set, and index values of different candidate frequency domain components are different.

In another example, the K frequency domain vectors may be selected from an orthogonal DFT base $B_2$, where

$B_2$ is a $N_f \times N_f$ matrix. Elements included in $B_2$ are defined as $[B_2]_{m,n} = \frac{1}{\sqrt{N}} e^{\frac{j*2\pi*m*n}{N_{sb}}}$ , where $0 \le m \le N_f$ - 1, $0 \le n \le N_f$ - 1, $N_f$ column vectors are $N_f$ bases, and K bases may be selected from the $N_f$ bases as the K frequency domain vectors. j is an imaginary unit, and a square of j is equal to -1. $\pi$ is a ratio of circumference to diameter. Optionally, an index value identifies a base in the orthogonal DFT base $B_2$, and index values of different bases are different.

In another example, the K frequency domain vectors are agreed on in a protocol, or are configured by the sending device for the receiving device in advance. For example, the method may be used in the beamformed scenario.

$\tilde{W}^r$ in the formula (1) may be described as follows: $\tilde{W}^r$ is a combination coefficient matrix whose dimension is $2L * K$, an element $a_{i,j}$ in $\tilde{W}^{(r)}$ is referred to as a combination coefficient, an element $a_{i,j}$ in an i$^{th}$ row and a j$^{th}$ column in the space-frequency combination coefficient matrix $\tilde{W}^r$ is referred to as a combination coefficient, a combination coefficient whose value is not zero may be referred to as a non-zero combination coefficient, a non-zero combination coefficient $a_{i,j}$ corresponds to an i$^{th}$ spatial domain vector in the space-frequency component matrix $W_{N_t}^r$ and a j$^{th}$ frequency domain vector in the frequency domain vector matrix $W_{N_f}^r$ , $i = 1,2,..., 2L, j = 1, 2,\cdots, N_f,$ and a value of the element $a_{i,j}$ is a weighted value of a space-frequency component matrix obtained by multiplying a conjugate transposition of the i$^{th}$ spatial domain vector (namely, vectors in an i$^{th}$ column of $W_{N_f}^r$ ) by a conjugate transposition of the j$^{th}$ frequency domain vector (namely, vectors in a j$^{th}$ row of $W_{N_f}^r$ ).

$$
\tilde{W}^r = \begin{bmatrix} a_{1,1} & a_{1,2} & \cdots & a_{1,K} \\ a_{2,1} & a_{2,2} & \cdots & a_{2,K} \\ \vdots & \vdots & \cdots & \vdots \\ a_{2L,1} & a_{2L,2} & \cdots & a_{2L,K} \end{bmatrix}
$$

Optionally, to control signaling overheads, a maximum quantity $K_0$ ($K_0<=2L*K$) of space-frequency combination coefficients that may be reported in the space-frequency combination coefficient matrix $\tilde{W}^r$ may be preconfigured, that is, a quantity of non-zero combination coefficients that may be reported does not exceed $K_0$. A value of $K_0$ is related to a quantity L of spatial domain vectors and a quantity K of frequency domain vectors, $K_0 = \lceil \beta * 2L * K \rceil$ , where a value of $\beta$ may be {3/4, 1/2, 1/4, 1/8}. Optionally, $K_1$ space-frequency combination coefficients (Ki <=Ko) with non-zero amplitudes corresponding to $K_0$ combination coefficient subsets may be reported.

In this embodiment of this application, for one type of feature A, such as spatial domain vector, when one or more features A are described, the one or more features A may be referred to as at least one feature A, a feature A set, or the like. The one or more features A may be represented in various forms such as a set, a list, a subset, or an element in a set. This is not limited. When a to-be-used feature A is configured from the one or more features A, the one or more features A may also be referred to as one or more candidate features A, at least one candidate feature A, a feature A candidate set, a candidate feature A set, or the like. This is not limited.

Further, after receiving the channel information that is shown in the manner (2) and that is cooperatively reported by the receiving device and the another receiving device, the sending device restores $\tilde{W}^r$ based on the non-zero combination coefficient included in the channel information, restores the spatial domain vector matrix $W_{N_t}^r$ based on indexes of the L spatial domain vectors included in the channel information and position information of the non-zero combination coefficients, and restores the frequency domain vector matrix $W_{N_f}^r$ based on the indexes of the L spatial domain vectors included in the channel information and the position information of the non-zero combination coefficients.

Further, the sending device reversely deduces the space-frequency matrix $W^r$ according to the formula (1). After space-frequency matrices $W^r$ corresponding to all receive antennas or spatial layers are obtained, the sending device obtains, based on the space-frequency matrix $W^r$ corresponding to each receive antenna or spatial layer, a precoding matrix corresponding to a frequency domain unit, precodes, based on the precoding matrix corresponding to the frequency domain unit, a downlink signal transmitted in the frequency domain unit, and sends the precoded downlink signal.

It should be understood that, that the channel information includes the information about the non-zero combination coefficient may include: information about non-zero combination coefficients in combination coefficient matrices corresponding to $N_{Rx}$ (or $N_{Layer}$) space-frequency matrices is carried in $N_{Rx}$ (or $N_{Layer}$) arrays in the channel information in a one-to-one correspondence, or information about non-zero combination coefficients in combination coefficient matrices corresponding to all space-frequency matrices is carried in a same array in the channel information. A specific carrying manner to be used may be pre-agreed on by the receiving device and the sending device or may be specified in a protocol. This is not limited.

Manner (3): The channel information includes a value of a non-zero combination coefficient $a_{i,j}$ in $\tilde{W}^{(r)}$.

For example, the space-frequency matrix may also be represented by using the following formula (2). In the formula (2), $\sum$ represents a sum of to-be-reported non-zero combination coefficients in $\tilde{W}^r$, $c_i$ is an $i^{th}$ column vector of $W_{N_f}^r$, and $b_j$ is a $j^{th}$ row vector of $W_{N_f}^r$. In this embodiment of this application, "*" represents multiplication calculation.

$$W^r = \sum_{i,j} a_{i,j} * c_i * b_j \quad \text{Formula (2)}$$

It can be learned from the formula (2) that, to obtain the channel information of the downlink channel, the sending device only needs to obtain $a_{i,j}$, $c_i$, and $b_j$. The sending device may obtain $a_{i,j}$, $c_i$, and $b_j$ in the following manner: The receiving device sends an uplink sounding reference signal (sounding reference signal, SRS) to the sending device, and the sending device receives the SRS, and measures the SRS to obtain a channel state of an uplink channel between the sending device and the receiving device. The sending device transforms the uplink channel information according to the formula (2), to obtain a position of a non-zero combination coefficient that is in $\tilde{W}^r$ and that corresponds to the uplink channel. According to channel reciprocity, positions of a non-zero combination coefficient in $\tilde{W}^r$ corresponding to the downlink channel and a non-zero combination coefficient in $\tilde{W}^r$ corresponding to the uplink channel are the same, and values of the non-zero combination coefficients are different.

Further, to obtain the downlink channel, the sending device transmits a beamformed (beamformed) CSI-RS, that is, transmits a spatial domain vector $c_i$ and a frequency domain vector $b_j$ at a position of each non-zero combination coefficient. The receiving device sequentially feeds back the received $a_{i,j}$ to the sending device, and the sending device knows a spatial domain vector $c_i$ and a frequency domain vector $b_j$ that are corresponding to each $a_{i,j}$, and may restore $\tilde{W}^r$. It is to be noted that in this embodiment of this application, that the sending device transmits the beamformed CSI-RS may mean that the sending device sends the beamformed CSI-RS.

For example, as shown in FIG. 1b, shadow parts in FIG. 1b are positions of non-zero combination coefficients. The sending device may transmit beamformed CSI-RSs at these positions, that is, transmit (or send) beamformed CSI-RSs at the positions of the non-zero combination coefficients. After receiving the beamformed CSI-RSs at these positions, the receiving device measures the received beamformed CSI-RSs to obtain values of the non-zero combination coefficients, that is, obtains values of $a_{i,j}$ corresponding to the positions of the non-zero combination coefficients, and reports, to the sending device, the values of the non-zero combination coefficients via the channel information.

It should be understood that, that the channel information includes the value of the non-zero combination coefficient may include: values of non-zero combination coefficients in combination coefficient matrices corresponding to $N_{Rx}$ (or $N_{Layer}$) space-frequency matrices are carried in $N_{Rx}$ (or $N_{Layer}$) arrays in the channel information in a one-to-one correspondence, or values of non-zero combination coefficients in combination coefficient matrices corresponding to all space-frequency matrices are carried in a same array in the channel information. A specific carrying manner to be used may be pre-agreed on by the receiving device and the sending device or may be specified in a protocol. This is not limited.

The foregoing manner (1) to manner (3) describe several representation forms of the channel information. In a MU-MIMO scenario, channel information reported by each sending device (for example, the first terminal or the second terminal) may be designed with reference to the manner (1) to manner (3). The channel information in the foregoing three manners is merely used as an example for description. This embodiment of this application is not limited thereto. For example, the channel information in this embodiment of this application may alternatively be channel information in another form. It should be understood that design manners of to-be-reported channel information of sending devices that cooperatively report channel information are the same. For example, if a terminal 1 and a terminal 2 need to cooperatively report channel information, the terminal 1 and the terminal 2 may design the channel information in the manner shown in the foregoing manner (1), or may design the channel information in the manner shown in the foregoing manner (2) or manner (3).

With reference to the accompanying drawings in this specification, the following describes a method for cooperatively reporting channel information by a plurality of different sending devices. For ease of description, in this embodiment of this application, an example in which the sending device is an access network device and the receiving device is a terminal is used for description.

A channel information reporting method provided in embodiments of this application may be applied to various communication systems, for example, a long term evolution (long term evolution, LTE) system, a 5th generation (5th generation, 5G) mobile communication system, a wireless-fidelity (wireless-fidelity, Wi-Fi) system, a future communication system, or a system integrating a plurality of communication systems. This is not limited in embodiments of this application. 5G may also be referred to as new radio (new radio, NR).

The channel information reporting method provided in embodiments of this application may be applied to various communication scenarios, for example, may be applied to one or more of the following communication scenarios: enhanced mobile broadband (enhanced mobile broadband, eMBB), ultra-reliable and low-latency communication (ultra-reliable and low-latency communication, URLLC), machine type communication (machine type communication, MTC), massive machine type communication (massive machine type communication, mMTC), device-to-device (device-to-device, D2D), vehicle-to-everything (vehicle to everything, V2X), vehicle-to-vehicle (vehicle to vehicle, V2V), and the Internet of Things (internet of things, IoT).

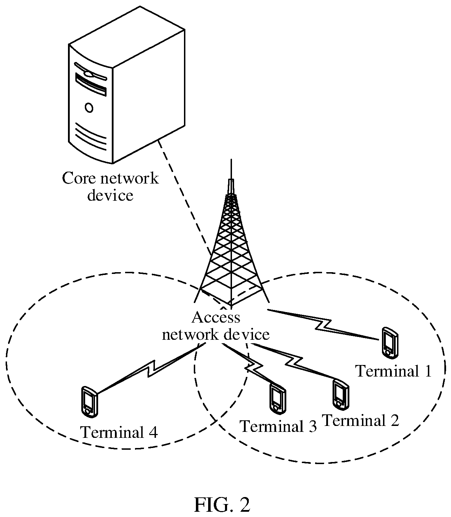

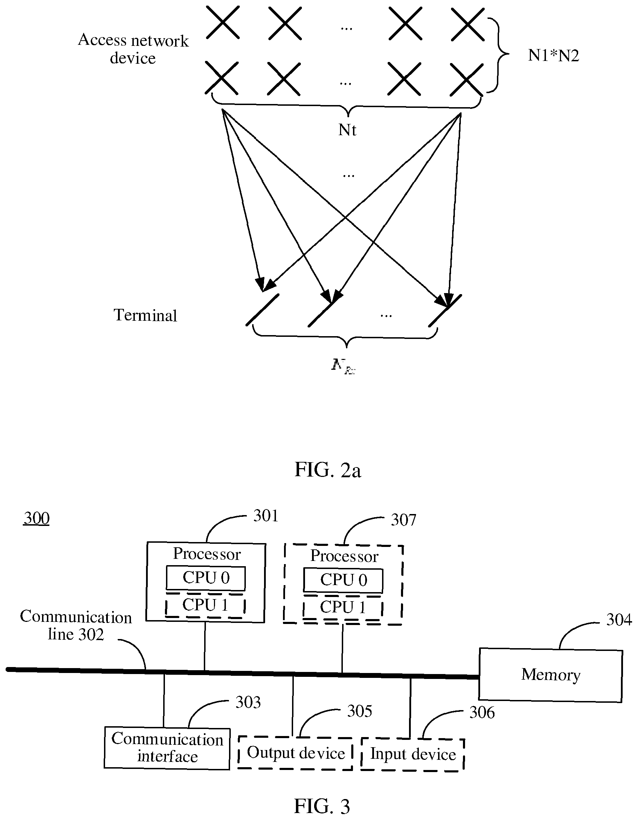

The following uses the communication system shown in FIG. 2 as an example to describe the channel information reporting method provided in embodiments of this application.

FIG. 2 is a schematic diagram of a communication system according to an embodiment of this application. As shown in FIG. 2, the communication system may include an access network device and a plurality of terminals, and may further include a core network device and the like. The access network device may cover one or more cells. The terminal may access the access network device in one cell covered by the access network device, and send uplink data to the access network device and/or receive a downlink signal sent by the access network device. Optionally, the terminals may directly communicate with each other. For example, direct communication between terminals may be implemented by using a device-to-device (device-to-device, D2D) technology.

In this embodiment of this application, as shown in FIG. 2a, the access network device in FIG. 2 may have $N_1$ horizontal antennas and $N_2$ vertical antennas. If the horizontal antennas and the vertical antennas have two polarization directions, a quantity of sending antenna ports of the access network device $N_t = 2N_1 * N_2$; if the horizontal antennas and the vertical antennas have one polarization direction, a quantity of sending antenna ports of the access network color device $N_t = N_1 * N_2$. The terminal may have $N_{Rx}$ receive antennas. The access network device and the terminal may support data stream transmission by using $N_{Layer}$ spatial layers. The access network device and the terminal support signal transmission in $N_f$ frequency domain units.

It is to be noted that FIG. 2 is merely an example block diagram, and a quantity of nodes and a quantity of cells included in FIG. 2 are not limited. In addition to the function nodes shown in FIG. 2, another node, for example, a gateway device and/or an application server, may be further included. This is not limited. The access network device and the core network device communicate with each other in a wired manner or a wireless manner, for example, communicate with each other through a next generation (next generation, NG) interface.

The access network device is mainly configured to implement functions such as resource scheduling, radio resource management, and/or radio access control of the terminal. Specifically, the access network device may include any node in a base station, a wireless access point, a transmission reception point (transmission reception point, TRP), a transmission point (transmission point, TP), and another access node. In embodiments of this application, an apparatus configured to implement a function of the access network device may be an access network device; or may be an apparatus, for example, a chip system, that can support the access network device in implementing the function. The apparatus may be installed in the access network device, or may be used with the access network device in a matching manner. In embodiments of this application, the chip system may include a chip, or may include a chip and another discrete component. In the technical solutions provided in embodiments of this application, the technical solutions provided in embodiments of this application are described by using an example in which the apparatus for implementing the function of the access network device is an access network device.

The terminal may be a terminal device (terminal equipment), user equipment (user equipment, UE), a mobile station (mobile station, MS), a mobile terminal (mobile terminal, MT), or the like. Specifically, the terminal may be a mobile phone, a tablet computer, or a computer having a wireless transceiver function, or may be a virtual reality (virtual reality, VR) terminal, an augmented reality (augmented reality, AR) terminal, a wireless terminal in industrial control, a wireless terminal in self-driving, a wireless terminal in telemedicine, a wireless terminal in a smart grid, a wireless terminal in a smart city (smart city), a smart appliance, a vehicle-mounted terminal, or the like. In embodiments of this application, an apparatus configured to implement a function of the terminal may be a terminal, or may be an apparatus, for example, a chip system, that can support the terminal in implementing the function. The apparatus may be installed in the terminal, or may be used with the terminal in a matching manner. The following describes the channel information reporting method provided in embodiments of this application by using an example in which the apparatus for implementing the function of the terminal is a terminal.

During specific implementation, the network elements shown in FIG. 2, such as the terminals and the access network device, may use a composition structure shown in FIG. 3 or include components shown in FIG. 3. FIG. 3 is a schematic diagram of a structure of a communication apparatus 300 according to an embodiment of this application. When the communication apparatus 300 has a function of the terminal in embodiments of this application, the communication apparatus 300 may be a terminal, or may be a chip or a system-on-chip in a terminal. When the communication apparatus 300 has the function of the terminal in embodiments of this application, the communication apparatus 300 may be an access network device, or may be a chip or a system-on-chip in an access network device.

As shown in FIG. 3, the communication apparatus 300 includes a processor 301, a communication line 302, and a communication interface 303. Further, the communication apparatus 300 may also include a memory 304. The processor 301, the memory 304, and the communication interface 303 may be connected to each other through the communication line 302.

The processor 301 may be a central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. Alternatively, the processor 301 may be another apparatus having a processing function, for example, a circuit, a component, or a software module. This is not limited.

The communication line 302 is configured to transmit information between components included in the communication apparatus 300.

The communication interface 303 is used by the communication apparatus 300 to communicate with another device or another communication network. The another communication network may be an Ethernet, a radio access network (radio access network, RAN), a wireless local area network (wireless local area network, WLAN), or the like. The communication interface 303 may be an interface circuit, a pin, a radio frequency module, a transceiver, or any apparatus that can implement communication. The radio frequency module may include an antenna, a radio frequency circuit, and the like. The radio frequency circuit may include an integrated radio frequency chip, a power amplifier, and the like.

The memory 304 is configured to store instructions. The instructions may be a computer program.

The memory 304 may be a read-only memory (read-only memory, ROM) or another type of static storage device that can store static information and/or instructions, a random access memory (random access memory, RAM) or another type of dynamic storage device that can store information and/or instructions, an electrically erasable programmable read-only memory (electrically erasable programmable read-only memory, EEPROM), a compact disc read-only memory (compact disc read-only memory, CD-ROM) or another compact disc storage, an optical disc storage, a magnetic disk storage medium, or another magnetic storage device. The optical disc storage includes a compact disc, a laser disc, an optical disc, a digital versatile disc, or a blue-ray disc.

It is to be noted that the memory 304 may exist independently of the processor 301, or may be integrated with the processor 301. The memory 304 may be configured to store instructions, program code, some data, or the like. The memory 304 may be located inside the communication apparatus 300, or may be located outside the communication apparatus 300. This is not limited. The processor 301 is configured to execute the instructions stored in the memory 304, to implement a channel information reporting method provided in the following embodiments of this application.

In an example, the processor 301 may include one or more CPUs, for example, a CPU 0 and a CPU 1 in FIG. 3.

In an optional implementation, the communication apparatus 300 includes a plurality of processors. For example, in addition to the processor 301 in FIG. 3, the communication apparatus 300 may further include a processor 307.

In an optional implementation, the communication apparatus 300 further includes an output device 305 and an input device 306. For example, the input device 306 is a device such as a keyboard, a mouse, a microphone, or a joystick, and the output device 305 is a device such as a display or a speaker (speaker).

It is to be noted that the communication apparatus 300 may be a desktop computer, a portable computer, a network server, a mobile phone, a tablet computer, a wireless terminal, an embedded device, a chip system, or a device having a structure similar to that in FIG. 3. In addition, the composition structure shown in FIG. 3 does not constitute a limitation on the communication apparatus. In addition to the components shown in FIG. 3, the communication apparatus may include more or fewer components than those shown in the figure, or some components may be combined, or different component arrangements may be used.

The following describes the channel information reporting method provided in embodiments of this application with reference to the communication system shown in FIG. 2. Each device in the following embodiment may have the components shown in FIG. 3. Actions, terms, and the like in embodiments of this application may be mutually referenced. This is not limited. For example, in embodiments of this application, "report" may be replaced with "feed back". In embodiments of this application, names of messages exchanged between devices, names of parameters in the messages, or the like are merely examples. Other names may alternatively be used during specific implementation. This is not limited.

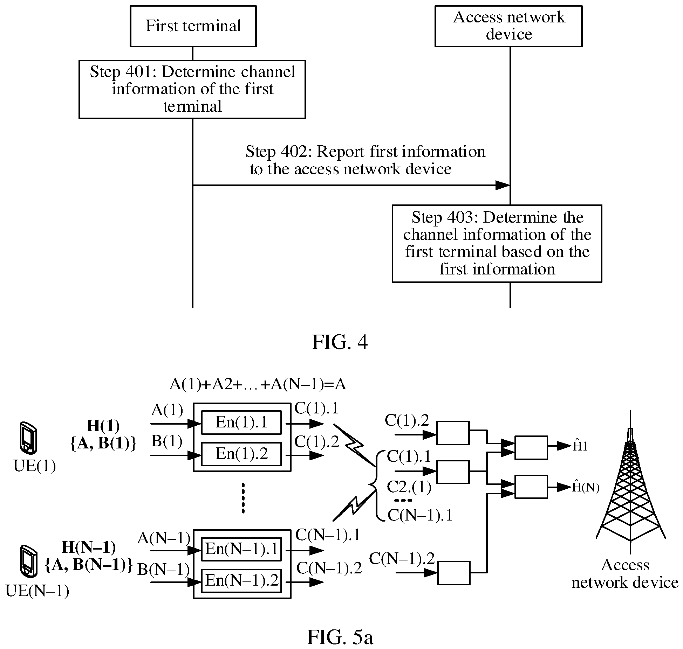

FIG. 4 is a flowchart of a channel information reporting method according to an embodiment of this application. As shown in FIG. 4, the method may include step 401 to step 403.

Step 401: A first terminal determines channel information of the first terminal.

The first terminal may be any terminal in FIG. 2. The first terminal may have $N_{Rx}$ receive antennas. A polarization manner of the receive antenna of the first terminal is not limited in this application. The receive antenna of the first terminal may be a single-polarized antenna, or may be a dual-polarized antenna. There are $N_{Layer}$ spatial layers between the first terminal and an access network device.

The channel information of the first terminal may indicate a channel state of a downlink channel between the first terminal and the access network device. As shown in the foregoing manner (1), the channel information of the first terminal may include a channel matrix of the downlink channel between the first terminal and the access network device, for example, a space-frequency matrix corresponding to the $N_{Rx}$ receive antennas; or as shown in the foregoing manner (1), the channel information of the first terminal includes a precoding matrix of a downlink channel between the first terminal and the access network device, for example, a space-frequency matrix corresponding to $N_{Layer}$ spatial layers; or as shown in the foregoing manner (2), the channel information of the first terminal includes information about some or all non-zero combination coefficients in the combination coefficient matrix $\tilde{W}^r$; or as shown in the foregoing manner (3), the channel information of the first terminal includes a value of a non-zero combination coefficient in the combination coefficient matrix $\tilde{W}^r$.

Specifically, for related descriptions of the channel matrix, the precoding matrix, the combination coefficient matrix, the spatial domain vector matrix, and the frequency domain vector matrix, and a design form of the channel information of the first terminal, refer to the foregoing manner (1) to manner (3).

Step 402: The first terminal reports the first information to the access network device.

The first information may indicate some or all information in first common information (common information) in the channel information of the first terminal and channel information of a second terminal. The first common information may be same and/or similar information (also referred to as common information (common information)) between the channel information of the first terminal and the channel information of the second terminal. In this embodiment of this application, same and/or similar information in channel information of different terminals may be referred to as the first common information. In other words, the first common information in the channel information of the first terminal and the first common information in the channel information of the second terminal are same and/or similar information. Same and/or similar information in different sub-channel information of a same terminal may be referred to as second common information. This is uniformly described herein, and similar cases are not described in detail below.

It is to be noted that in this embodiment of this application, the channel information of the first terminal and the channel information of the second terminal may include one set of common information, or may include two or more sets of common information, and each set of common information may be reported to the access network device in a reporting manner of the first common information. Specifically, a quantity of sets of common information included in the channel information of the first terminal and the channel information of the second terminal may be specified in advance, or may be determined and indicated to the first terminal by the access network device, or may be determined and indicated to the access network device by the first terminal.

The channel information of the second terminal may indicate a channel state of a downlink channel between the second terminal and the access network device. For content included in the channel information of the second terminal, refer to the foregoing manner (1) to manner (3). The second terminal may be a terminal in a same terminal group as the first terminal, or the second terminal may be a terminal that is to join a terminal group to which the first terminal belongs. The terminal group described in this embodiment of this application may include one or more terminals that can cooperatively feed back/report channel information, and same and/or similar information exists in channel information of different terminals in the terminal group.

Specifically, a design form of the first common information is described in the following example 1 or example 2.

Example 1: The channel information of the first terminal includes N1 elements, the channel information of the second terminal includes N2 elements, the first common information may include N3 elements, the N3 elements are same elements and/or similar elements in the N1 elements of the first terminal and the N2 elements of the second terminal, and N3 may be an integer greater than or equal to 1.

The same elements may be elements that are in the N1 elements and the N2 elements and that have a same position and a same value. A position of the same element in the N1 elements is the same as a position of the same element in the N2 elements. For example, when the channel information includes the channel matrix shown in the manner (1), that the positions are the same means that positions of elements in space-frequency matrices corresponding to receive antennas of different terminals are the same, or positions in space-frequency matrices corresponding to all receive antennas of different terminals are the same. For example, positions of an $X^{th}$ row and a $Y^{th}$ column of each of two space-frequency matrices corresponding to two receive antennas of UE 1 are the same as positions of an $X^{th}$ row and a $Y^{th}$ column of each of four space-frequency matrices corresponding to four receive antennas of UE 2. For another example, when the channel information includes the precoding matrix shown in the manner (1), that the positions are the same means that positions of elements in space-frequency matrices corresponding to spatial layers of different terminals are the same. For example, an $X^{th}$ row and a $Y^{th}$ column of a space-frequency matrix corresponding to a first layer of UE 1 and an $X^{th}$ row and a $Y^{th}$ column of a space-frequency matrix corresponding to a first layer of UE 2 are considered as same positions.

The similar elements may be elements that are in the N1 elements and the N2 elements and that have a same position and a difference less than a threshold. A position of the similar element in the N1 elements is the same as a position of the similar element in the N2 elements. The threshold may be preset based on a requirement, or may be configured/indicated by the access network device for/to the first terminal. That elements in the N1 elements and the N2 elements have a same position and a difference less than a threshold may include: The elements in the N1 elements and the N2 elements have a same position, and a difference between binary values corresponding to quantized bits obtained by quantizing the elements in the N1 elements and the N2 elements is less than a threshold.

In addition, if quantized bits obtained by quantizing values of N3 elements in the N1 elements are partially the same as quantized bits obtained by quantizing values of N3 elements in the N2 elements, and positions of the N3 elements in the N1 elements are the same as positions of the N3 elements in the N2 elements, the N3 elements in the N1 elements and the N3 elements in the N2 elements are similar elements. Alternatively, if a probability that quantized bits obtained by quantizing N3 elements in the N1 elements are the same as quantized bits obtained by quantizing values of N3 elements in the N2 elements is greater than a probability threshold, and positions of the N3 elements in the N1 elements are the same as positions of the N3 elements in the N2 elements, the N3 elements are similar elements.

In this embodiment of this application, N1 and N2 are integers greater than or equal to 1, and N1 and N2 may be the same or different. In other words, a quantity of elements included in the channel information of the first terminal is the same as or different from a quantity of elements included in the channel information of the second terminal.

For example, the following uses an example in which the channel information includes a precoding matrix, the first terminal is UE(1), the second terminal is UE(2), a precoding matrix corresponding to the UE(1) includes 10 elements: {(a11, a21, a31, a41, a51), (a12, a22, a32, a42, a52)}, and aprecoding matrix corresponding to the UE(2) includes 10 elements: {(b11, b21, b31, b41, b51) and (b12, b22, b32, b42, b52)}. For the elements (a11, a21, a31, a41, a51) and (b11, b21, b31, b41, b51) at same positions, if values of (a11, a21, a31, a41, a51) and (b11, b21, b31, b41, b51) are the same, (a11, a21, a31, a41, a51) and (b11, b21, b31, b41, b51) may be referred to as same elements, and may be used as the first common information. If in (a11, a21, a31, a41, a51) and (b11, b21, b31, b41, b51), quantized bits obtained through amplitude quantization of a11 are 110011, quantized bits obtained through amplitude quantization of b11 are 110110, 3 high-order bits are the same, 3 low-order bits are different, and a difference between 110011 and 110110 is less than or equal to a threshold, a11 and b11 are similar elements, and may be included in the first common information.

In the example 1, the access network device may indicate the first common information to the first terminal in advance. For example, the access network device may indicate position information of the N3 elements in the channel information of the first terminal to the first terminal. In addition, the channel information shown in the example 1 may include the channel matrix shown in the manner (1), the precoding matrix shown in the manner (1), or the information about the non-zero combination coefficient shown in the manner (2). That the first common information includes the N3 elements may mean that the first common information includes position information and/or values of the N3 elements. Optionally, when the channel information includes the information about the non-zero combination coefficient shown in the manner (2), the first common information may further include indexes of frequency domain vectors and indexes of spatial domain vectors that correspond to the N3 elements.

Example 2: The channel information of the first terminal includes R1 pieces of sub-channel information, and the channel information of the second terminal includes R2 pieces of sub-channel information. The first common information may be a value of a first position in the R1 pieces of sub-channel information of the first terminal and the R2 pieces of sub-channel information of the second terminal.

R1 and R2 are integers greater than or equal to 1, and R1 and R2 may be the same or may be different. This is not limited. R1 may be a quantity $N_{Rx}$ of receive antennas or a quantity $N_{Layer}$ of layers (or spatial layers) of the first terminal. If R1 is the quantity of receive antennas of the first terminal, the R1 pieces of sub-channel information may include values of non-zero combination coefficients in $N_{Rx}$ combination coefficient matrices obtained by performing dual-domain compression processing on space-frequency matrices corresponding to $N_{Rx}$ receive antennas of the first terminal. If R1 is $N_{Layer}$, R1 pieces of sub-channel information correspond to $N_{Layer}$ layers, and the R1 pieces of sub-channel information may include values of non-zero combination coefficients in $N_{Layer}$ combination coefficient matrices obtained by performing dual-domain compression processing on space-frequency matrices corresponding to the $N_{Layer}$ space layers.

R2 may be a quantity of receive antennas or a quantity of layers (or spatial layers) of the second terminal. If R2 is the quantity of receive antennas of the second terminal, the R2 pieces of sub-channel information may include a value of a non-zero combination coefficient in a combination coefficient matrix obtained by performing dual-domain compression processing on a space-frequency matrix corresponding to each receive antenna of the second terminal. If R2 is $N_{Layer}$, R2 pieces of sub-channel information correspond to $N_{Layer}$ layers, and the R2 pieces of sub-channel information may include a value of a non-zero combination coefficient in a combination coefficient matrix obtained by performing dual-domain compression processing on a space-frequency matrix corresponding to each spatial layer. That is, the channel information shown in the example 2 includes the value of the non-zero combination coefficient in the combination coefficient matrix shown in the manner (3).

The first positions may be positions corresponding to elements that are in the R1 pieces of sub-channel information of the first terminal and the R2 pieces of sub-channel information of the second terminal and that have same or similar values. That values of the first position are similar may include any one of the following cases. Case 1: A difference between a value of a first position in the R1 pieces of sub-channel information of the first terminal and a value of a first position in the R2 pieces of sub-channel information of the second terminal is less than a threshold. The threshold may be preset based on a requirement, or may be configured/indicated by the access network device for/to the first terminal. Case 2: Some or all of quantized bits obtained by quantizing values of the first position in the R1 pieces of sub-channel information of the first terminal and quantized bits obtained by quantizing values of the first position in the R2 pieces of sub-channel information of the second terminal are the same. Case 3: A difference between a quantized bit obtained by quantizing a value of the first position in the R1 pieces of sub-channel information of the first terminal and a quantized bit obtained by quantizing a value of the first position in the R2 pieces of sub-channel information of the second terminal is less than a threshold. Case 4: A probability that a quantized bit obtained by quantizing a value of the first position in the R1 pieces of sub-channel information of the first terminal and a quantized bit obtained by quantizing a value of the first position in the R2 pieces of sub-channel information of the second terminal are the same is greater than a threshold.

In the example 2, the access network device may determine position information of the first position in the channel information of the first terminal, and indicate the position information of the first position to the first terminal. Alternatively, which position in the channel information is the first position is pre-specified, or the first terminal may determine the first position, and indicate position information of the first position to the access network device. This is not limited.

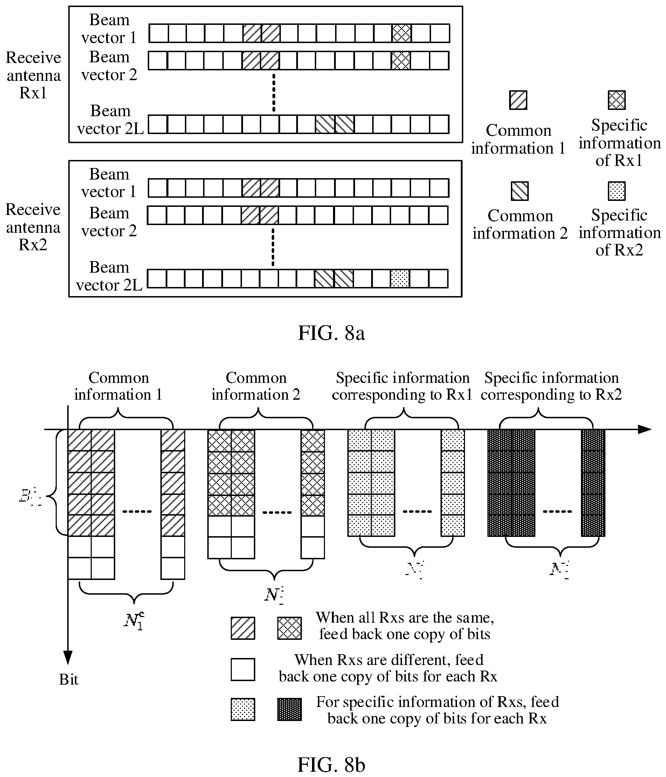

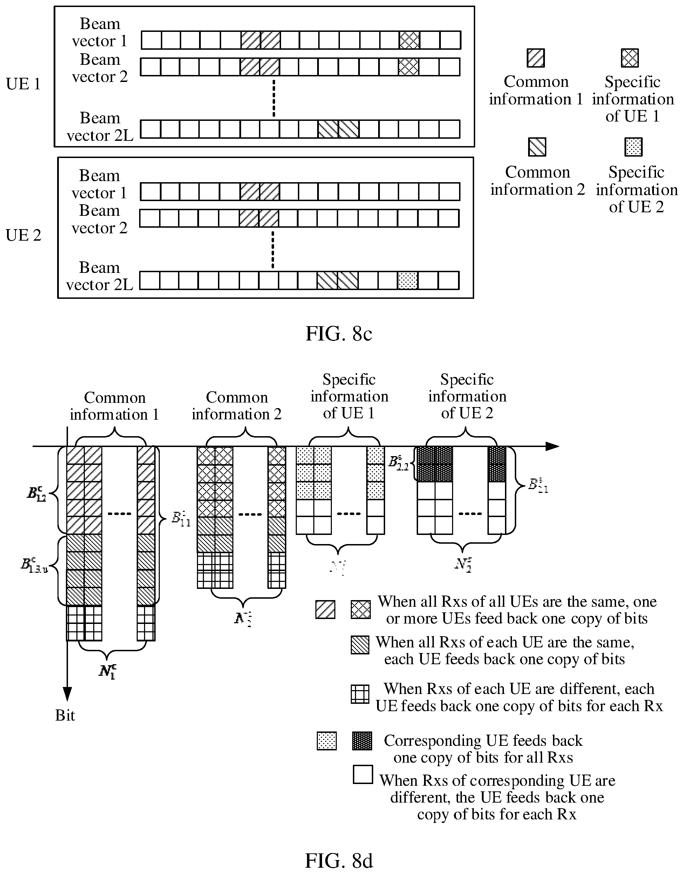

For example, the first terminal is UE 1, and the second terminal is UE 2. As shown in FIG. 8c, a space-frequency matrix corresponding to one spatial layer of the UE 1 and the UE 2 is constituted by 2L spatial domain vectors (or referred to as beam vectors) and 16 frequency domain vectors. Non-zero combination coefficient positions in the combination coefficients corresponding to the space-frequency matrix of the UE(1) are {the sixth frequency domain vector of a beam vector 1, the seventh frequency domain vector of the beam vector 1, the fourteenth frequency domain vector of the beam vector 1, the sixth frequency domain vector of a beam vector 2, the seventh frequency domain vector of the beam vector 2, the tenth frequency domain vector of a beam vector 2L, the eleventh frequency domain vector of the beam vector 2L}, and non-zero combination coefficient positions of the UE(2) are {the sixth frequency domain vector of a beam vector 1, the seventh frequency domain vector of the beam vector 1, the sixth frequency domain vector of a beam vector 2, the seventh frequency domain vector of the beam vector 2, the tenth frequency domain vector of a beam vector 2L, the eleventh frequency domain vector of the beam vector 2L, the fourteenth frequency domain vector of the beam vector 2L}. If values of {the sixth frequency domain vector of the beam vector 1, the seventh frequency domain vector of the beam vector 1, the sixth frequency domain vector of the beam vector 2} corresponding to the UE(1) and the UE(2) are the same or similar, {the sixth frequency domain vector of the beam vector 1, the seventh frequency domain vector of the beam vector 1, the sixth frequency domain vector of the beam vector 2} may be referred to as the first position, and the first common information includes values of {the sixth frequency domain vector of the beam vector 1, the seventh frequency domain vector of the beam vector 1, and the sixth frequency domain vector of the beam vector 2}.

In embodiments of this application, the first information may indicate some or all information in the first common information by using several possible designs shown in the following first possible design to sixth possible design.

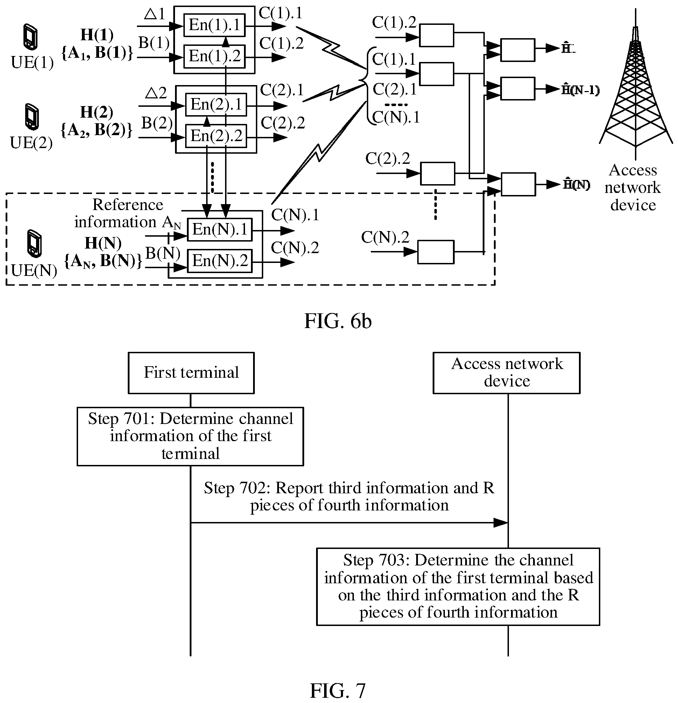

Further, if the channel information of the first terminal further includes specific information of the first terminal, the first terminal may further report second information to the access network device, where the second information may indicate the specific information (specific information) in the channel information of the first terminal. The specific information of the first terminal may be information that is specific to the first terminal and that is different from channel information of another terminal. Specifically, for a process of reporting the specific information by the first terminal, refer to the following descriptions in the embodiment corresponding to FIG. 7.

For example, the first terminal may process the first information by using the first compressor, and report, to the access network device, a code word obtained through compression, to reduce compression space during reporting of the first information, and improve resource utilization. Similarly, if the first terminal further reports the second information, the first terminal may also process the second information by using a second compressor, and report, to the access network device, a code word obtained through compression, to reduce compression space during reporting of the second information, and improve resource utilization.

The first compressor is configured to compress the first information, and the second compressor may be configured to compress the second information. A compression parameter of the first compressor and a compression parameter of the second compressor may be indicated to the first terminal by the access network device. For example, the access network device may send second indication information to the first terminal, where the second indication information may indicate the compression parameter of the first compressor. The access network device may send sixth indication information to the first terminal, where the sixth indication information may indicate the compression parameter of the second compressor. Alternatively, the compression parameter of the first compressor and the compression parameter of the second compressor may be agreed on by the access network device and the terminal, or may be pre-specified in a protocol.

A compression parameter of a compressor may indicate the compressor, indicate a function implemented or assisted by the compressor, and/or an initialization parameter of the compressor, and the like. For example, the compressor is a neural network model. The compression parameter of the compressor may include one or more of the following: an identifier of the neural network model, information about a network structure corresponding to the neural network model, network weight information corresponding to the neural network model, an identifier of a network structure corresponding to the neural network model, and an identifier of a network weight corresponding to the neural network model.

The foregoing step 401 to step 402 are described by using an example in which the first terminal reports the first information. It should be understood that another terminal, for example, the second terminal, may also report some or all information in the first common information to the access network device with reference to the foregoing steps, so that one or more terminals cooperatively report all the complete information in the first common information to the access network device.

When the terminal reports some information in the first common information, some information in first common information reported by different terminals cooperatively may not overlap or partially overlap, and the some information in the first common information reported by the different terminals constitutes the complete information of the first common information. Compressors used by the different terminals to report the some information in the first common information may be the same or different. This is not limited. When the terminal reports all information in the first common information, at least one terminal in a plurality of terminals or at least one terminal with light load may report all information in the first common information, and another terminal in the plurality of terminals does not need to report the first common information. When a quantity of terminals that report all information in the first common information is greater than 1, robustness of information transmission can be improved. To be specific, the access network device only needs to receive common information reported by at least one of the terminals.

Step 403: The access network device receives the first information, and determines common information in the channel information of the first terminal based on the first information.

For example, the access network device receives the first information reported by the first terminal, and if the first information indicates the all information in the first common information, restores all information in the first common information based on the first information. If the first information indicates some information in the first common information, the access network device restores the some information in the first common information based on the first information. After another terminal completes reporting other some information in the first common information, the some information in the first common information reported by the another terminal is combined with the some information in the first common information reported by the first terminal to obtain the first common information.

Further, the first terminal may obtain the channel information of the first terminal based on the first common information and the specific information of the first terminal; determine, based on the channel information of the first terminal, a precoding matrix that matches the downlink channel between the first terminal and the access network device; precode, based on the determined precoding matrix, a downlink signal to be sent to the first terminal; and send the precoded downlink signal to the terminal.

Based on the method shown in FIG. 4, when channel information of a plurality of terminals includes common information, each terminal reports some or all information in the common information, so that the plurality of terminals cooperatively/jointly report the channel information, to reduce signaling overheads.

In the method shown in FIG. 4, that the first information indicates all or some information in the first common information may include any one of the following first possible design manner to the sixth possible design manner.

In a first possible design, the first information includes some or all information in the first common information.

All information in the first common information may be information about all elements included in the first common information or values of all non-zero combination coefficients included in the first common information. For example, the first information includes N3 elements, or the first information includes a value of the first position. For example, assuming that N3 = 10, the first information may include the 10 elements. For another example, if the first position is the sixth frequency domain unit of the beam vector 1 and the seventh frequency domain unit of the beam vector 1, the first information may include a value of the sixth frequency domain unit of the beam vector 1 and a value of the seventh frequency domain unit of the beam vector 1.

The some information in the first common information may be values of some elements in the N3 elements or some positions in the first position, or some values in a comprehensive value of all information in the first common information. For example, a ones-digit or tens-digit of the comprehensive value is used as some values. Alternatively, the comprehensive value is converted into a binary bit string, and high-order bits or low-order bits in the binary bit string are used as some values. In this embodiment of this application, the comprehensive values may be values obtained through calculation by inputting all information into a preset calculation rule. The preset calculation rule may be pre-agreed on by the access network device and the terminal or pre-specified in a protocol. Specifically, the preset calculation rule may include a function f(x), where x is an input variable of a function f(), and x may be all information in the first common information.

For example, it is assumed that the first common information includes N3 elements, and N3 = 10. The 10 elements may be divided into two parts. The first information may include information about five elements in one part. The first terminal indicates the five elements to the access network device, and the second terminal reports information about the remaining five elements to the access network device. Alternatively, the N3 elements are calculated to obtain a comprehensive value 18, and a value "1" on the tens-digit is used as some information in the first common information, and the first terminal reports the information to the access network device. For another example, the first information may include a value of the sixth frequency domain unit in the beam vector 1 and a value of the seventh frequency domain unit in the beam vector 1. One of the two values is reported by the first terminal to the access network device, and the other value may be reported by the second terminal to the access network device.

In this possible design, the access network device may indicate, to the terminal, information that is specifically included in the first information and that is in the first common information. For example, if the first information includes all information in the first common information, before step 402, the access network device may indicate, to the first terminal, position information of the first common information in the channel information of the first terminal; if the first information includes some information in the first common information, before step 402, the access network device may indicate, to the first terminal, position information of the some information in the first common information in the channel information of the first terminal, or before step 402, the access network device indicates, to the first terminal, both position information of the first common information in the channel information of the first terminal and position information of the some information in the first common information in the first common information.

In a second possible design, the first information includes quantized bits obtained by quantizing the some or all information in the first common information.

For related descriptions of the some information in the first common information, refer to the descriptions in the first possible design.

For example, the first terminal may quantize all information in the first common information in a preset quantization manner, and include quantized bits obtained through quantization in the first information. Alternatively, the first terminal quantizes some information in the first common information in a preset quantization manner, and includes quantized bits obtained through quantization in the first information, to reduce signaling overheads.

The quantization manner may include uniform quantization or non-uniform quantization. The quantization manner and a length of the quantized bits may be configured by the access network device and indicated to the first terminal and the second terminal, or the quantization manner and the length of the quantized bits may be pre-specified in a protocol.

In a third possible design, the first information includes all or some bits in quantized bits obtained by quantizing all information in the first common information.

For related descriptions of the all information in the first common information, refer to the descriptions in the first possible design.

The quantized bits obtained by quantizing all information in the first common information may refer to quantized bits obtained by inputting all information in the first common information as an input parameter into a quantizer. The quantizer may include but is not limited to an analog-to-digital converter (analog-to-digital converter).

Specifically, that the first information includes all bits in the quantized bits obtained by quantizing all information in the first common information may include: in the example 1, the first information includes quantized bits obtained by inputting the N3 elements into the quantizer; and in the example 2, the first information includes quantized bits obtained by inputting the value of the first position into the quantizer.

It should be understood that, that the first information includes all bits in the quantized bits obtained by quantizing all information in the first common information is applicable to a scenario in which the first common information is same information in the channel information of the first terminal and the channel information of the second terminal, that is, a scenario of information with a same position and a same value. In this case, the first common information may be reported by the first terminal to the access network device, and another terminal (for example, the second terminal) does not need to report the first common information in channel information of the another terminal, to reduce signaling overheads of reporting the channel information by the another terminal.

Specifically, that the first information includes some bits in the quantized bits obtained by quantizing all information in the first common information may include the following cases. Case 1: The first common information is same information in the channel information of the first terminal and the channel information of the second terminal. The quantized bits obtained by quantizing all information in the first common information are divided into a plurality of parts of quantized bits corresponding to the first terminal and the second terminal. Lengths of different parts of quantized bits are the same or different. The first information includes a part of quantized bits corresponding to the first terminal. Case 2: The first common information is similar information in the channel information of the first terminal and the channel information of the second terminal. The first information includes first common bits. The first common bits are bits that have a same value and that are in quantized bits obtained by quantizing all information in the first common information in the channel information of the first terminal and quantized bits obtained by quantizing all information in the first common information in the channel information of the second terminal. Alternatively, the first common bits are divided into a plurality of parts of bits corresponding to the first terminal and the second terminal, and the first information includes a part of bits corresponding to the first terminal. It should be understood that in the case 2, for the first terminal, a bit other than the first common bits in the quantized bits obtained by quantizing all information in the first common information of the first terminal belongs to specific information of the first terminal, and the first terminal may separately report the bit to the access network device. Similarly, for the second terminal, a bit other than the first common bit in the quantized bits obtained by quantizing all information in the first common information of the second terminal belongs to specific information of the second terminal, and the second terminal may separately report the bit to the access network device.

It should be understood that, that the first information includes some information in the first common information is applicable to a scenario in which the first common information is same information and/or similar information in the channel information of the first terminal and the channel information of the second terminal.

In a fourth possible design, the first information indicates a relationship value between the first common information and reference information.

In this embodiment of this application, in a possible design, when similar information exists in channel information of a plurality of terminals (including the first terminal), similar information in channel information of any one of the plurality of terminals is used as reference information. The plurality of terminals may include a terminal that is already in a terminal group or a terminal (similar information) that is to join a terminal group. The terminal group may include a plurality of terminals that support cooperatively reporting the channel information by using the method in this embodiment of this application. Alternatively, the reference information may be pre-agreed on by the terminal and the access network device, or may be indicated to the first terminal by the access network device. This is not limited.

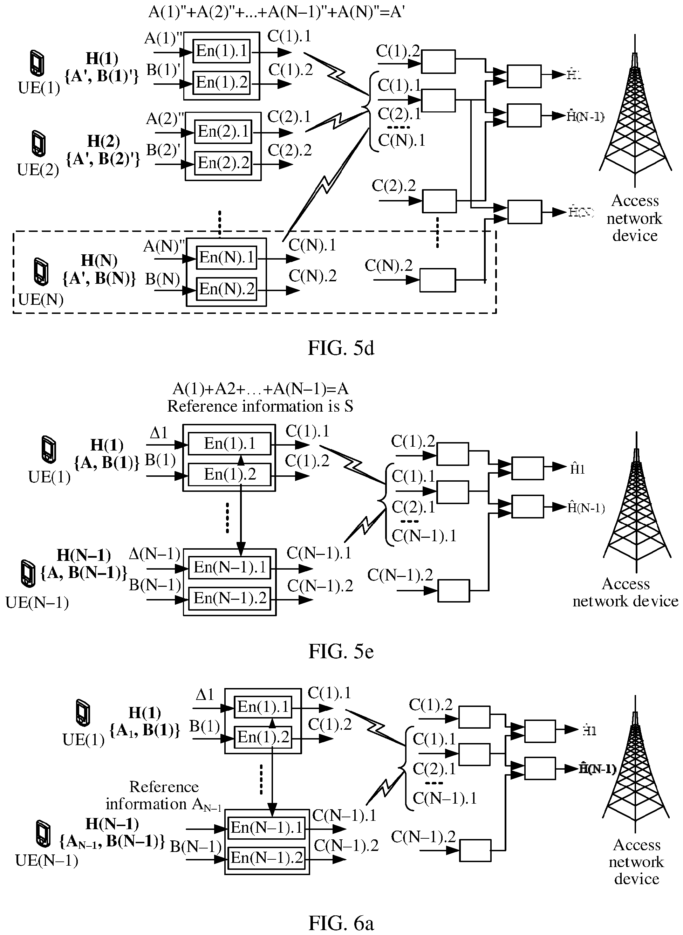

In another possible design, when same information (for example, the first common information) exists in channel information of a plurality of terminals (including the first terminal), reference information may be preconfigured. For each of the plurality of terminals, at least one of the plurality of terminals cooperatively reports a relationship value between the first common information and the preconfigured reference information to the access network device. For example, there are the following three implementations: 1. One terminal reports the relationship value between the first common information and the preconfigured reference information to the access network device. 2. The relationship value between the first common information and the preconfigured reference information is divided into several parts, and several corresponding terminals respectively report the several parts of the relationship value to the access network device, so that the access network device synthesizes the several parts of information, restores each part of information based on the synthesized information and the relationship value, and then obtains final common information through synthesis. 3. The first common information is divided into several parts, and a relationship value between the parts of information and the reference information is reported to the access network device, so that the access network device restores the parts of information based on the relationship value and the reference information, and synthesizes the parts of information to obtain the common information. In the third implementation, reference information corresponding to each part of information may be the same or different. This is not limited. Specifically, for the third implementation, refer to the following FIG. 5e.

That the first information indicates the relationship value between the first common information and the reference information may include that the first information indicates the relationship value between the first common information and the reference information, or include a quantized bit obtained by quantizing the relationship value, or the like. The relationship value between the first common information and the reference information may include a deviation value between the first common information and the reference information, a multiple value between the first common information and the reference information, or a deviation value between a normalized value of the first common information and a normalized value of the reference information.

For example, if the reference information is not information in the channel information of the first terminal, but information in channel information of another terminal, the first terminal may obtain the reference information from the terminal corresponding to the reference information. For example, the reference information is information in channel information of a third terminal. The first terminal may perform signaling interaction with the third terminal based on the identifier of the third terminal by using a D2D technology, to obtain the reference information from the third terminal. Specifically, for this process, refer to the following FIG. 6a.

Identification information of the third terminal may be indicated to the first terminal by the access network device, so that the first terminal determines, based on an indication of the access network device, that similar information in channel information of which terminal may be used as reference information.

In a fifth possible design, the first information indicates a relationship value between some information in the first common information and some information in reference information.

Related descriptions of the some information in the first common information and the reference information is described above. Details are not described again.

The some information in the reference information may include some elements of the reference information or some values in a comprehensive value of all information in the reference information. For related descriptions of the comprehensive value, refer to the foregoing descriptions.

The relationship value between the some information in the first common information and the some information in the reference information may include: a deviation value between the some information in the first common information and the some information in the reference information, a multiple value between the some information in the first common information and the some information in the reference information, a deviation value between a normalized value of the some information in the first common information and a normalized value of the some information in the reference information, or the like. Specifically, a form of the relationship value to be used and a part of information in the reference information to be used may be predetermined by the terminal and the access network device, or may be pre-specified in a protocol.

In a sixth possible design, the first information indicates a relationship value between a first part of bits and a second part of bits, the first part of bits are some bits in quantized bits obtained by quantizing the first common information, and the second part of bits are some bits in quantized bits obtained by quantizing the reference information.

Related descriptions of the first common information and the reference information are described above. Details are not described again.

A length of the first part of bits may be the same as or different from a length of the second part of bits. The length of the first part of bits and a position of the first part of bits in the quantized bits obtained by quantizing the first common information may be indicated to the first terminal by the access network device.

The relationship value between the first part of bits and the second part of bits may include: a deviation value between a binary value corresponding to the first part of bits and a binary value corresponding to the second part of bits, or a multiple value between the binary value corresponding to the first part of bits and the binary value corresponding to the second part of bits, or a deviation value between a normalized value of the first part of bits and a normalized value of the second part of bits. Specifically, a form of the relationship value to be used may be predetermined by the terminal and the access network device, or may be pre-specified in a protocol.

The following describes in detail the method in which a plurality of terminals cooperatively report channel information shown in FIG. 4 with reference to FIG. 5a. It is assumed that a terminal group includes N-1 UEs: {UE(1), UE(2), ..., UE(N-1)}, where N is an integer greater than or equal to 3, and design manners of channel information of all UEs are the same. For example, the channel information includes a channel matrix. A same element in the channel information of the N-1 UEs is common information (common information) A. Specific information of the UE(1) is B(1), specific information of the UE(2) is B(2), ..., and specific information of the UE(N-1) is B(N-1). A compressor for processing common information is En(i).1, and a compressor for processing specific information is En(i).2, where a value of i belongs to [1, N-1].

As shown in FIG. 5a, A is divided into (N-1) pieces of information corresponding to the N-1 UEs: A(1), A(2), ..., A(N-1), where A(1)+A(2)+...+A(N-1)=A, where + in the formula may be understood as combination or joining, but is not limited to addition. The N-1 UEs may report the common information A cooperatively by using the following step 1 to step 3.

Step 1: The access network device sends first indication information to each UE in the N-1 UEs, indicates, to the UE, some information and specific information corresponding to the UE, and indicates, to the UE, a compression parameter of each compressor.

This embodiment of this application is not limited to indicating, to the UE, the some information and the specific information corresponding to the UE, and indicating, to the UE, the compression parameter of each compressor. Alternatively, the compression parameter of the compressor may be preconfigured. In this case, the access network device indicates, to the UE, only the some information and the specific information corresponding to the UE. Alternatively, the compression parameter of the compressor further indicates the some information and the specific information corresponding to the UE. In this case, the access network device only needs to indicate the compression parameter of each compressor to the UE.

Step 2: Based on the first indication information sent by the access network device, an $i^{th}$ UE in the N-1 UEs reports some information A(i) corresponding to the $i^{th}$ UE to the access network device after the some information A(i) corresponding to the $i^{th}$ UE is processed by a compressor En(i).1, and reports specific information of the $i^{th}$ UE to the access network device after the specific information of the $i^{th}$ UE is processed by a compressor En(i).2.

For example, as shown in FIG. 5a, the UE(1) reports, to the access network device, a codeword C(1).1 obtained a compressor En(1).1 by processing A(1); the UE(1) reports,to the access network device,a codeword C(1).2 obtained by processing B(1) by a compressor En(1).2; the UE(2) reports, to the access network device, a codeword C(2).1 obtained by processing A(2) by a compressor En(2).1; and the UE(2) reports, to the access network device, a codeword C(2).2 obtained by processing B(2) by a compressor En(2).2. By analogy, the UE(N-1) reports, to the access network device, a codeword C(N-1).1 obtained by processing A(N-1) by a compressor En(N-1).1, and the UE(N-1) reports, to the access network device, a codeword C(N-1).2 obtained by processing B(N-1) by a compressor En(N-1).2.

Step 3: The access network device receives some information and specific information reported by each UE, and determines channel information of each UE based on the some information and the specific information reported by each terminal.

For example, as shown in FIG. 5a, the access network device separately decompresses received C(1).1, C(2).1, ..., and C(N-1).1 to obtain A(1), A(2), ..., and A(N-1); obtains A through calculation by combining A(1), A(2), ..., and A(N-1); decompresses received C(1).2 to obtain B(1); and combines A with specific information B(1) of the UE(1) to restore a channel matrix $\hat{H}1$ of the UE(1). For example, A and the specific information B(1) of the UE(1) are placed at corresponding positions in the channel matrix $\hat{H}1$. Similarly, A is combined with specific information B(N-1) of the UE(N-1) to restore a channel matrix $\hat{H}(N-1)$ of the UE(N-1).

In this embodiment of this application, a decompressor used by the access network device side to decompress a received codeword C(i).2 sent by UE(i) may be named De(i).2, and a decompressor for decompressing a codeword corresponding to received common information may be named De1.

Based on the method shown in FIG. 5a, common information in channel information of the (N-1) terminals may be divided into (N-1) parts of information, and each terminal correspondingly reports some information that belongs to the terminal and specific information of the terminal. The access network device side combines received some information reported by the terminal to obtain common information, and combines the common information and the specific information of the terminal to obtain channel E matrix of the terminal. In this way, each terminal may report some information, to reduce signaling overheads of the terminal.

During actual application, a new terminal may join a terminal group. In this case, the following three cooperative reporting methods may be included: In a first method, common information A in channel information of an original terminal in the terminal group is not updated, and an execution process of the original terminal is not updated/not changed. By default, common information in channel information of the newly joined terminal is also A, and the newly joined terminal reports only specific information of the newly joined terminal. In a second method, the common information A in the channel information of the original terminal in the terminal group is not updated. In this way, it can be ensured that specific information of the original terminal in the terminal group remains unchanged. In addition, the common information in the channel information of the newly joined terminal is also A by default, and the newly joined terminal also joins a team for cooperatively reporting the common information A, that is, the newly joined terminal reports some information in the common information. In a third method, the common information A is updated to common information A' in the channel information of the newly joined terminal and the channel information of the original terminal in the terminal group, and the newly joined terminal and the original terminal in the terminal group cooperatively report the common information A' with reference to the manner in FIG. 5a.

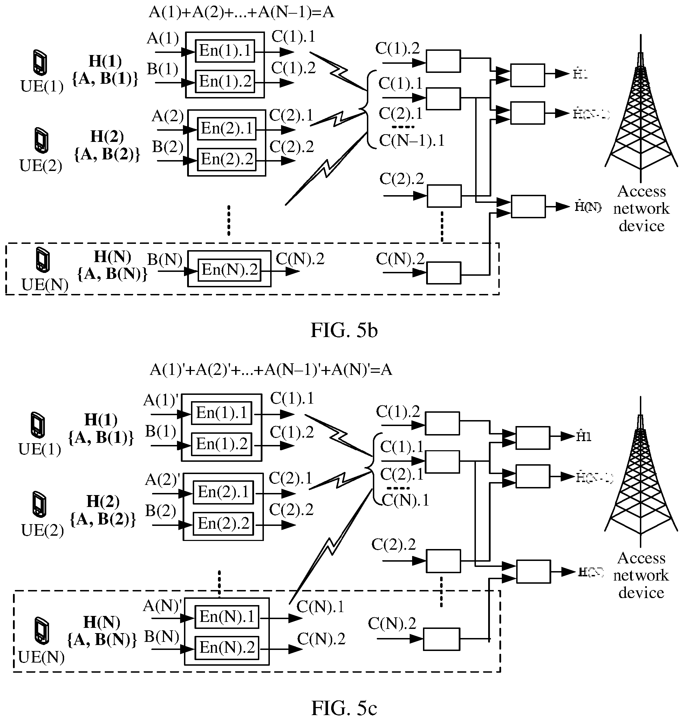

With reference to FIG. 5b, the following describes the first cooperative reporting manner in which a terminal joins the terminal group, and the newly joined terminal reports only specific information to the access network device. As shown in FIG. 5b, it is assumed that a terminal group includes N-1 UEs: {UE(1), UE(2), ..., UE(N-1)}, where N is an integer greater than or equal to 3, and design manners of channel information of all UEs are the same. For example, the channel information includes a channel matrix. A same element in the channel information of the N-1 UEs is common information (common information) A. Specific information of the UE(1) is B(1), specific information of the UE(2) is B(2), ..., and specific information of the UE(N-1) is B(N-1). A compressor for processing common information is En(i). 1, and a compressor for processing specific information is En(i).2, where a value of i belongs to [1, N-1]. UE(N) is UE that newly joins the terminal group.

Step 1 to step 3 corresponding to FIG. 5a are performed. To be specific, the N-1 original UEs in the terminal group may still report, based on an indication of the access network device, the some information and the specific information that belong to the UE, as shown in FIG. 5a.

Step 4: The access network device determines that the UE(N) joins the terminal group. For the newly joined UE(N), the access network device indicates, to the UE(N), position information of specific information B(N) of the UE(N) in channel information of the UE(N), and indicates, to the UE(N), a compression parameter of a compressor En(N).2 for processing the specific information B(N) of the UE(N).

For example, the access network device may determine, in the following manner, that the UE(N) joins the terminal group: if the channel information of the UE(N) includes information that is the same as and/or similar to the first common information, determining that the UE(N) joins the terminal group; or if a distance between the UE(N) and each terminal in the terminal group is less than a distance threshold, determining that the UE(N) joins the terminal group.

Step 5: The UE(N) reports, to the access network device based on an indication of the access network device, a codeword C(N).2 obtained by processing the specific information B(N) of the UE(N) by a compressor En(N).2.

Step 6: The access network device receives the specific information C(N).2 reported by the UE(N), decompresses C(N).2 to obtain the specific information B(N), and determines the channel information of the UE(N) based on the specific information B(N) of the UE(N) and the determined common information A, for example, determines a channel matrix of the UE(N).

For example, as shown in FIG. 5b, the access network device separately decompresses received C(1).1, C(2).1, ..., and C(N-1).1 to obtain A(1), A(2), ..., and A(N-1); obtains A through calculation by combining A(1), A(2), ..., and A(N-1); and combines A with the specific information B(N) of the UE(N) to restore a channel matrix $\hat{H}(N)$ of the UE(N).

Based on the method shown in FIG. 5b, when a new terminal joins a terminal group that cooperatively reports channel information, the newly joined terminal is indicated to report specific information of the newly joined terminal, to reduce signaling overheads caused by reporting channel information by the newly joined terminal.

The following describes the second cooperative reporting manner with reference to FIG. 5c. A newly joined terminal is not limited to reporting specific information of the newly joined terminal. Alternatively, the newly joined terminal may further report the common information in cooperation with original terminals in the terminal group, that is, all terminals in the terminal group participate in reporting the common information, to implement load balancing.

As shown in FIG. 5c, it is assumed that a terminal group includes N-1 UEs: {UE(1), UE(2), ..., UE(N-1)}, where N is an integer greater than or equal to 3, and design manners of channel information of all UEs are the same. For example, the channel information includes a channel matrix. A same element in the channel information of the N-1 UEs is common information (common information) A. Specific information of the UE(1) is B(1), specific information of the UE(2) is B(2), ..., and specific information of the UE(N-1) is B(N-1). A compressor for processing common information is En(i).1, and a compressor for processing specific information is En(i).2, where a value of i belongs to [1, N-1]. In this case, if the UE(N) is UE that newly joins the terminal group, the common information A may be re-divided into A(1)', A(2)', ..., and A(N)', where A(1)'+A(2)'+...A(N)'=A.

The process in which each UE reports specific information in step 1 to step 3 in FIG. 5a is performed. For the N-1 original UEs in the terminal group, because some information corresponding to the UE(i) is updated, the access network device needs to re-indicate, to each of the N-1 UEs, position information of some information corresponding to the UE and/or a compression parameter of a compressor En(i).1 of the UE(i).

Step 4: The access network device determines that the UE(N) joins the terminal group. For the newly joined UE(N), the access network device indicates one or more types of the following information to the UE(N): position information of A(N)' of the UE(N), a compression parameter of a compressor En(N).1 of the UE(N), position information of the specific information B(N) of the UE(N) in the channel information of the UE(N), and a compression parameter of a compressor En(N).2 of UE(N).

The compression parameter of the compressor En(N).1 of the UE(N) may be used for compressing some information A(N)' of the UE(N), and the compression parameter of the compressor En(N).1 of the UE(N) may include information indicating A(N)' of the UE(N), for example, position information of A(N)' of the UE(N). The compression parameter of the compressor En(N).2 of the UE(N) is for compressing specific information B(N) of the UE(N), and the compression parameter of the compressor En(N).2 of the UE(N) may include information indicating B(N) of the UE(N), for example, position information of B(N) of the UE(N).

For a manner in which the access network device determines that the UE(N) joins the terminal group, refer to the descriptions in FIG. 5b. Details are not described again.

Step 5: The UE(N) reports, to the access network device based on an indication of the access network device, a codeword C(N).2 obtained by processing the specific information B(N) of the UE(N) by a compressor En(N).2. The UE(N) reports, to the access network device, a codeword C(N).1 obtained by the compressor En(N).1 by processing the some information A(N)' of the UE(N).

For example, as shown in FIG. 5a, the UE(1) reports, to the access network device, a codeword C(1).1 obtained by processing A(1)' by a compressor En(N)1.1; and the UE(2) reports, to the access network device, a codeword C(2).1 obtained by processing A(2)' by a compressor En(N)2.1. By analogy, the UE(N-1) reports, to the access network device, a codeword C(N-1).1 obtained by processing A(N-1)' by a compressor En(N-1).1, and the UE(N) reports, to the access network device, a codeword C(N).1 obtained by processing A(N)' by a compressor En(N).1.

Step 6: The access network device receives some information reported by each of the UE(1) to the UE(N-1), receives some information and specific information reported by the UE(N), determines the common information A based on the some information reported by each terminal, and determines channel information of each UE, for example, a channel matrix of each UE, based on the common information A and the specific information of each UE.

For example, as shown in FIG. 5c, the access network device separately decompresses received C(1).1, C(2).1, ..., and C(N).1 to obtain A(1)', A(2)', ..., and A(N)'; obtains A through calculation by combining A(1)', A(2)', ..., and A(N)'; and combines A with specific information B(1) of the UE(1) to restore a channel matrix $\hat{H}1$ oftheUE(1). Similarly, A and specific information B(N) of the UE(N) are combined to restore the channel matrix $\hat{H}(N)$ of the UE(N).

Based on the method shown in FIG. 5c, when a new terminal joins the terminal group that cooperatively reports the channel information, the newly joined terminal also participates in reporting the common information. To be specific, common information in channel information of (N-1) terminals is re-divided into N parts of information, and each terminal correspondingly reports some information that belongs to the terminal. The access network device side combines received some information reported by the terminal to obtain common information, and combines the common information and the specific information of the terminal to obtain channel information of the terminal. In this way, each terminal reports some information, to reduce signaling overheads of the terminal.

The following describes the third cooperative reporting manner with reference to FIG. 5d. As shown in FIG. 5d, it is assumed that a terminal group includes N-1 UEs: {UE(1), UE(2), ..., UE(N-1)}, where N is an integer greater than or equal to 3, and design manners of channel information of all UEs are the same. For example, the channel information includes a channel matrix. A same element in the channel information of the N-1 UEs is common information (common information) A. Specific information of the UE(1) is B(1), specific information of the UE(2) is B(2), ..., and specific information of the UE(N-1) is B(N-1). If the UE(N) is UE that newly joins the terminal group, it may be re-determined that same information in channel information of the N UEs in the terminal group is common information A', and A' is divided into N parts of information: A(1)", A(2)", ..., A(N)", where A(1)"+A(2)"+...A(N)"=A'. The specific information of the UE(1) is updated to B(1)', the specific information of the UE(2) is updated to B(2)', ..., and the specific information of the UE(N) is B(N)'. A compressor for processing common information is En(i).1, and a compressor for processing specific information is En(i).2, where a value of i belongs to [1, N]. For a process in which the N terminals cooperatively report the channel information, refer to the following step 1 to step 3.

Step 1: The access network device sends first indication information to UE(i) in a terminal group, and indicates one or more of the following information to the UE(i): some information A(i)" corresponding to the UE(i), specific information B(i)' corresponding to the UE(i), a compression parameter of a compressor En(i).1 of the UE(i), and a compression parameter of a compressor En(i).2 of the UE(i).

Step 2: Based on the first indication information sent by the access network device, UE(i) reports some information A(i)" corresponding to the UE(i) to the access network device after the some information A(i)" corresponding to the UE(i) is processed by a compressor En(i).1, and reports specific information B(i)' of the UE(i) to the access network device after the specific information B(i)' of the UE(i) is processed by a compressor En(i).2.

For example, as shown in FIG. 5d, the UE(1) reports, to the access network device, a codeword C(1).1 obtained a compressor En(1).1 by processing A(1)"; the UE(1) reports,to the access network device,a codeword C(1).2 obtained by processing B(1)' by a compressor En(1).2; the UE(2) reports, to the access network device, a codeword C(2).1 obtained by processing A(2)" by a compressor En(2).1; and the UE(2) reports, to the access network device, a codeword C(2).2 obtained by processing B(2)' by a compressor En(2).2. By analogy, the UE(N) reports, to the access network device, a codeword C(N).1 obtained by processing A(N)" by a compressor En(N).1, and the UE(N) reports, to the access network device, a codeword C(N).2 obtained by processing B(N)' by a compressor En(N).2.

Step 3: The access network device receives some information and specific information reported by each UE, and determines channel information of each UE based on the some information and the specific information reported by each terminal.

For example, as shown in FIG. 5d, the access network device separately decompresses received C(1).1, C(2).1, ..., and C(N).1 to obtain A(1)", A(2)", ..., and A(N)"; obtains A" through calculation by combining A(1)", A(2)", ..., and A(N)"; decompresses received C(1).2 to obtain B(1)'; and combines A' with specific information B(1)' of the UE(1) to restore a channel matrix $\hat{H}1$ of the UE(1). For example, A" and the specific information B(1)' of the UE(1) are placed at corresponding positions in the channel matrix $\hat{H}1$. Similarly, A" is combined with specific information B(N-1)' of the UE(N-1) to restore a channel matrix $\hat{H}(N-1)$ of the UE(N-1). Similarly, A" is combined with specific information B(N)' of the UE(N) to restore channel information $\hat{H}(N)$ of the UE(N).

Based on the method shown in FIG. 5d, common information in channel information of the N terminals may be divided into N parts of information, and each terminal correspondingly reports some information that belongs to the terminal and specific information of the terminal. The access network device side combines received some information reported by the terminal to obtain common information, and combines the common information and the specific information of the terminal to obtain channel information of the terminal. In this way, each terminal may report some information, to reduce signaling overheads of the terminal.

In FIG. 5b to FIG. 5d, an example in which a terminal joins a terminal group is used for description. When a terminal exits the terminal group, an implementation method is similar. For example, when a terminal exits, and the exiting terminal does not participate in reporting common information, or the common information reported by the terminal is repeatedly reported by another terminal, common information reported by each terminal may not be updated. Alternatively, when a terminal exits, similar to FIG. 5c or FIG. 5d, common information reported by another terminal in the terminal group is updated.

Alternatively, when same information exists in channel information of the plurality of terminals, reference information may be further preconfigured. After the common information is divided into a plurality of parts of some information corresponding to the plurality of terminals, a relationship value between the some information and the reference information is reported to an access network. The following describes the manner with reference to FIG. 5e.

As shown in FIG. 5e, the terminal group includes N-1 UEs: {UE(1), UE(2), ..., UE(N-1)}, where N is an integer greater than or equal to 3, and design manners of channel information of all UEs are the same. For example, the channel information includes a channel matrix. A same element exists in the channel information of the N-1 UEs, and the same element is referred to as common information (common information) A. As shown in FIG. 5e, A is divided into (N-1) pieces of information corresponding to the N-1 UEs: A(1), A(2), ..., and A(N-1). A(1)+A(2)+...+A(N-1)=A, where + in the formula may be understood as combination or joining, but is not limited to addition. Specific information of the UE(1) is B(1), specific information of the UE(2) is B(2), ..., and specific information of the UE(N-1) is B(N-1). A compressor for processing the relationship value between the some information and the reference information is En(i). 1, and a compressor for processing the specific information is En(i).2, where a value of i belongs to [1, N-1]. It is assumed that the reference information is S. In this case, N-1 UEs may report respective relationship values between common information and reference information by using the following step 1 to step 3.

Step 1: The access network device sends first indication information to each UE in the N-1 UEs, indicates, to the UE, some information and specific information corresponding to the UE, and indicates, to the UE, a compression parameter of each compressor. In addition, the access network device indicates the reference information S to UE(1), UE(2), ..., and UE(N-1) in the terminal group.

Step 2: Based on the indication of the access network device, each of the UE(1), the UE(2), ..., and the UE(N-1) in the terminal group reports a relationship value between some information and reference information corresponding to the UE to the access network device after the relationship value is processed by a compressor En(i). 1, and reports specific information of the UE to the access network device after the specific information is processed by a compressor En(i).2.

For example, as shown in FIG. 5e, an example in which the relationship value is a deviation value $\Delta$ between the some information and the reference information is used. The UE(1) reports, to the access network device, a codeword C(1).1 obtained by processing a deviation value $\Delta1$ between A(1) and S by a compressor En(1).1, and the UE(1) reports, to the access network device, a codeword C(1).2 obtained by processing B(1) by a compressor En(1).2. The UE(2) reports, to the access network device, a codeword C(2).1 obtained by processing a deviation value $\Delta2$ between A(2) and S by a compressor En(2). 1; and reports, to the access network device, a codeword C(2).2 obtained by processing B(2) by a compressor En(2).2. By analogy, the UE(N-1) reports, to the access network device, a codeword C(N-1).1 obtained by processing a deviation value $\Delta(N-1)$ between A(N-1) and S by a compressor En(N-1). 1, and reports, to the access network device, a codeword C(N-1).2 obtained by processing B(N-1) by a compressor En(N-1).2.

Step 3: The access network device receives the specific information and the relationship value between the some information and the reference information reported by each UE, and determines channel information of each UE based on the relationship value and the specific information reported by each terminal.

For example, as shown in FIG. 5e, the access network device decompresses the received C(1).1 to obtain $\Delta1$, obtains some information A(1) based on $\Delta1$ and the reference information S, decompresses the received C(2).1 to obtain $\Delta2$, obtains some information A(2) based on $\Delta2$ and the reference information S, and so on, until the access network device decompresses the received C(N-1).1 to obtain $\Delta(N-1)$, and obtain some information A(N-1) based on $\Delta(N-1)$ and the reference information S. A(1), A(2), ..., and A(N-1) are combined to obtain A; the received C(1).2 is decompressed to obtain B(1); and A is combined with specific information B(1) of the UE(1) to restore a channel matrix $\hat{H}1$ of the UE(1). For example, A and the specific information B(1) of the UE(1) are placed at corresponding positions in the channel matrix $\hat{H}1$. Similarly, A is combined with specific information B(N-1) of the UE(N-1) to restore a channel matrix $\hat{H}(N-1)$ of the UE(N-1).

Based on the method shown in FIG. 5e, common information in channel information of a terminal may be divided into a plurality of parts of information, and a relationship value between the some information and the reference information and specific information of the terminal are reported to the access network device. Because a value of the relationship value is small, and the relationship value corresponds to a small quantity of information bits, signaling overheads of the terminal can be reduced.

In the foregoing FIG. 5a to FIG. 5e, an example in which same information exists in channel information of a plurality of terminals is used to describe joint reporting of channel information by the plurality of terminals. The following uses an example in which similar information (similar information) exists in the channel information of the plurality of terminals, the similar information is used as common information, and the terminal in the terminal group reports a relationship value between the common information and the reference information to the access network device to describe joint reporting of channel information by the plurality of terminals in the method shown in FIG. 4.

As shown in FIG. 6a, a terminal group includes N-1 UEs: {UE(1), UE(2), ..., UE(N-1)}, where N is an integer greater than or equal to 3. Channel information of all UEs is designed in a same manner. For example, the channel information includes a channel matrix, a similar (similar) element in the channel information of the N-1 UEs is used as common information (common information). Common information in channel information of the UE(1) is denoted as A(1), common information in channel information of the UE(2) is denoted as A(2), ..., and common information in channel information of the UE(N-1) is denoted as A(N-1). The common information A(N-1) in the channel information of the UE(N-1) is reference information, and A(1), A(2), ..., and A(N-1) are similar information. Specific information of the UE(1) is B(1), specific information of the UE(2) is B(2), ..., and specific information of the UE(N-1) is B(N-1). A compressor for processing the relationship value between the common information and the reference information is En(i). 1, and a compressor for processing the specific information is En(i).2, where a value of i belongs to [1, N-1]. The N-1 UEs may report common information of each UE by using the following step 1 to step 3.

Step 1: The access network device sends first indication information to each UE in the N-1 UEs, indicates, to the UE, which information in channel information of the UE is common information and which information is specific information, and indicates, to the UE, a compression parameter of each compressor. In addition, the access network device indicates, to the UE(1), the UE(2), ..., and the UE(N-2) in the terminal group, that the reference information is included in the channel information of the UE(N-1), and indicates, to the UE(N-1), that the common information in the channel information of the UE(N-1) is the reference information.

Step 2: Based on the indication of the access network device, each of the UE(1), the UE(2), ..., and the UE(N-2) in the terminal group performs D2D interaction with the UE(N-1), and obtains reference point A(N-1) from the UE(N-1). Each of the UE(1), the UE(2), ..., and the UE(N-2) reports a relationship value between some information and reference information corresponding to the UE to the access network device after the relationship value is processed by a compressor En(i).1, and reports specific information of the UE to the access network device after the specific information is processed by a compressor En(i).2.

It should be understood that, for the UE(N-1), the UE(N-1) reports the reference information to the access network device after the reference information is processed by a compressor En(N-1). 1, and reports the specific information of the UE(N-1) to the access network device after the specific information is processed by a compressor En(N-2).2.

For example, as shown in FIG. 6a, an example in which the relationship value is a deviation value $\Delta$ between the common information and the reference information is used. The UE(1) reports, to the access network device, a codeword C(1).1 obtained by processing a deviation value $\Delta 1$ between A(1) and A(N-1) by a compressor En(1).1, and the UE(1) reports, to the access network device, a codeword C(1).2 obtained by processing B(1) by a compressor En(1).2. The UE(2) reports, to the access network device, a codeword C(2).1 obtained by processing a deviation value $\Delta 2$ between A(2) and A(N-1) by a compressor En(2).1; and reports, to the access network device, a codeword C(2).2 obtained by processing B(2) by a compressor En(2).2. By analogy, the UE(N-1) reports, to the access network device, a codeword C(N-1).1 obtained by processing reference information A(N-1) of the UE(N-1) by a compressor En(N-1).1, and reports, to the access network device, a codeword C(N-1).2 obtained by processing B(N-1) by a compressor En(N-1).2.

Step 3: The access network device receives the specific information and the relationship value between the common information and the reference information reported by each UE, and determines channel information of each UE based on the relationship value and the specific information reported by each terminal.

For example, as shown in FIG. 6a, the access network device decompresses the received C(N-1).1 to obtain the reference information A(N-1), and separately decompresses C(1).1, C(2).1, ..., and C(N-2).1 to obtain relationship values $\Delta 1$, $\Delta 2$, ..., and $\Delta(N-2)$, obtains common information A(1) based on the reference information A(N-1) and the relationship value $\Delta 1$, obtains common information A(2) based on the reference information A(N-1) and the relationship value $\Delta 2$, ..., and obtains common information A(N-2) based on the reference information A(N-1) and the relationship value $\Delta(N-2)$. The received C(1).2 is decompressed to obtain B(1), and A(1) is combined with the specific information B(1) of the UE(1) to restore a channel matrix $\hat{H}1$ of the UE(1). For example, A(1) and the specific information B(1) of the UE(1) are placed at corresponding positions in the channel matrix $\hat{H}1$. Similarly, A(N-1) is combined with specific information B(N-1) of the UE(N-1) to restore a channel matrix $\hat{H}(N-1)$ of the UE(N-1).

Further, in the method shown in FIG. 6a, if a terminal, for example, the UE(N-1), corresponding to the reference information exits the terminal group, the access network device further needs to send indication information to each terminal to indicate that the UE(N-1) exits the terminal group, and that information included in the channel information of the UE(N-1) is no longer used as the reference information, and indicate new reference information or identification information of a terminal (for example, the UE(N-2) or another UE) corresponding to the new reference information to each terminal that is still in the terminal group.

Based on the method shown in FIG. 6a, the relationship value between the common information and the reference information in the channel information of the terminal and specific information of the terminal may be reported to the access network device. The access network device side obtains common information of the terminal through calculation based on received information reported by the terminal and the reference information, and combines the common information and the specific information of the terminal to obtain channel information of the terminal. In this way, each terminal reports the relationship value between the common information and the reference information. Because a value of the relationship value is small, and the relationship value corresponds to a small quantity of information bits, signaling overheads of the terminal can be reduced.

Further, if a terminal joins the terminal group, for the newly joined terminal, the access network device may send indication information to the newly joined terminal, to indicate a terminal to which the reference information belongs, so that the newly joined terminal obtains the reference information from the terminal corresponding to the reference information. Alternatively, if the reference information is updated to channel information of the newly joined terminal, the access network device may send indication information to each terminal again, to indicate identification information of the newly joined terminal, so that the terminal obtains the reference information based on the identification information of the newly joined terminal. The following provides descriptions by using an example in which channel information of the newly joined terminal is the reference information.

As shown in FIG. 6b, a terminal group includes N-1 UEs: {UE(1), UE(2), ..., UE(N-1)}, where N is an integer greater than or equal to 3. Channel information of all UEs is designed in a same manner. For example, the channel information includes a channel matrix, a similar (similar) element in the channel information of the N-1 UEs is used as common information (common information). Common information in channel information of the UE(1) is denoted as A(1), common information in channel information of the UE(2) is denoted as A(2), ..., and common information in channel information of the UE(N-1) is denoted as A(N-1). The common information A(N-1) in the channel information of the UE(N-1) is reference information, and A(1), A(2), ..., and A(N-1) are similar information. Specific information of the UE(1) is B(1), specific information of the UE(2) is B(2), ..., and specific information of the UE(N-1) is B(N-1). A compressor for processing the relationship value between the common information and the reference information is En(i). 1, and a compressor for processing the specific information is En(i).2, where a value of i belongs to [1, N-1].

Step 1 to step 3 corresponding to FIG. 6a are performed.

If a new terminal, namely, UE(N), joins the terminal group, and it is determined that reference information A(N-1) is updated to information A(N) in channel information of the newly joined UE(N), where A(1), A(2), ..., A(N-1), and A(N) are similar information, step 4 to step 6 are performed.

Step 4: The access network device determines that the UE(N) joins the terminal group. For the newly joined UE(N), when the access network device determines that A(N) in the channel information of the UE(N) is used as reference information, the access network device indicates identification information of the UE(N) to each of the original N-1 UEs, indicates, to the UE(N), that A(N) in the channel information of the UE(N) is reference information, and indicates one or more of the following information to the UE(N): a position of A(N) in the channel information of the UE(N), a position of specific information B(N) of the UE(N) in the channel information of the UE(N), a compression parameter of a compressor En(N).1 of the UE(N), and a compression parameter of a compressor En(i).2 of the UE(N).

Step 5: Based on an indication of the access network device, the UE(N) reports, to the access network device, a codeword C(N).1 obtained by the compressor En(N).1 by processing A(N) in the channel information, and reports, to the access network device based on an indication of the access network device, a codeword C(N).2 obtained by the compressor En(N).2 by processing the specific information B(N) of the UE(N).

Step 2: Based on the indication of the access network device, an $i^{th}$ UE in the (N-1) UE performs D2D interaction with the UE(N), and obtains the reference point A(N), reports a relationship value between common information $A_i$ of the $i^{th}$ UE and the reference information A(N) to the access network device after the relationship value is processed by a compressor En(i). 1, and reports specific information of the $i^{th}$ UE to the access network device after the specific information is processed by a compressor En(i).2.

Step 6: The access network device receives the specific information and the relationship value between the common information and the reference information reported by each UE, and determines channel information of each UE based on the relationship value and the specific information reported by each terminal.

For example, as shown in FIG. 6b, the access network device decompresses the received C(N).1 to obtain the reference information A(N), and separately decompresses C(1).1, C(2).1, ..., and C(N-1).1 to obtain relationship values $\Delta 1$, $\Delta 2$, ..., and $\Delta(N-1)$, obtains common information A(1) based on the reference information A(N) and the relationship value $\Delta 1$, obtains common information A(2) based on the reference information A(N) and the relationship value $\Delta 2$, ..., and obtains common information A(N) based on the reference information A(N) and the relationship value $\Delta(N-1)$. The received C(1).2 is decompressed to obtain B(1), and A(1) is combined with the specific information B(1) of the UE(1) to restore a channel matrix $\hat{H}1$ of the UE(1). For example, A(1) and the specific information B(1) of the UE(1) are placed at corresponding positions in the channel matrix $\hat{H}1$. Similarly, A(N) is combined with the specific information B(N) of the UE(N) to restore a channel matrix $\hat{H}(N)$ of the UE(N-1).

Further, in the method shown in FIG. 6b, if the UE(N) corresponding to the reference information exits the terminal group, the access network device further needs to send indication information to each terminal to indicate that the UE(N) exits the terminal group, and that information included in the channel information of the UE(N) is no longer used as the reference information, and indicate new reference information or identification information of a terminal (for example, the UE(N-2) or another UE) corresponding to the new reference information to each terminal that is still in the terminal group.

Based on the method shown in FIG. 6b, the relationship value between the common information and the reference information in the channel information of the terminal and specific information of the terminal may be reported to the access network device. The access network device side obtains common information of the terminal through calculation based on received information reported by the terminal and the reference information, and combines the common information and the specific information of the terminal to obtain channel information of the terminal. In this way, each terminal reports the relationship value between the common information and the reference information. Because a value of the relationship value is small, and the relationship value corresponds to a small quantity of information bits, signaling overheads of the terminal can be reduced.

In this embodiment of this application, there may be two or more sub-channels between a single terminal and the access network device, and channel information (which may be referred to as sub-channel information in this specification) of different sub-channels may include same and/or similar information, namely, redundant information. If channel information of all sub-channels is reported to the access network device, transmission resources are wasted. To resolve this problem, in this embodiment of this application, in a scenario in which a single terminal reports channel information, same and/or similar information in channel information of different sub-channels may be reported once to the access network device, to reduce signaling overheads. This manner is as shown in FIG. 7.

In this embodiment of this application, the manner in which the terminal reports channel information of different sub-channels shown in FIG. 7 is performed in combination with the manner in which a plurality of terminals cooperatively report common information shown in FIG. 4, or may be independently performed without depending on the manner in which a plurality of terminals cooperatively report common information shown in FIG. 4. In other words, the method shown in FIG. 7 may be independently performed as a specific embodiment. For example, in the scenario in which a single terminal reports channel information, same and/or similar information in channel information of different sub-channels may be reported once to the access network device according to the method shown in FIG. 7, to reduce signaling overheads. In an MU-MIMO scenario, if channel information of a sub-channel of a first terminal includes information that is the same as and/or similar to that in channel information of another terminal, the method in which a plurality of terminals cooperatively report common information as shown in FIG. 4 is used to report the common information of the plurality of terminals. For specific information of the first terminal, if the specific information of the first terminal is separately included in a plurality of pieces of sub-channel information, and the specific information included in the plurality of pieces of sub-channel information includes same and/or similar information, the same and/or similar information in the position information may be reported to the access network device by using the following method shown in FIG. 7, to reduce signaling overheads.

The following describes the method shown in FIG. 7.

FIG. 7 is a flowchart of a channel information reporting method according to an embodiment of this application. The method shown in FIG. 7 may be used in an MU-MIMO scenario, or may be used in a scenario in which a single terminal reports channel information. As shown in FIG. 7, the method may include step 701 to step 703.

Step 701: A first terminal determines channel information of the first terminal.

As described above, the first terminal may be any terminal in FIG. 2. The first terminal may have $N_{Rx}$ receive antennas. A polarization manner of the receive antenna of the first terminal is not limited in this application. The receive antenna of the first terminal may be a single-polarized antenna, or may be a dual-polarized antenna. There are $N_{Layer}$ spatial layers between the first terminal and an access network device.

The channel information of the first terminal may include R1 pieces of sub-channel information, and R1 may be a quantity $N_{Rx}$ of receive antennas or a quantity $N_{Layer}$ of layers (or spatial layers) of the first terminal.

If R1 is the quantity $N_{Rx}$ of receive antennas of the first terminal, there are $N_{Rx}$ sub-channels that are in a one-to-one correspondence with the $N_{Rx}$ receive antennas between the first terminal and the access network device. The R1 pieces of sub-channel information may refer to channel information of R1 sub-channels. For example, one piece of sub-channel information may include a space-frequency matrix corresponding to a receive antenna (or referred to as a channel matrix corresponding to a receive antenna) or include information (such as position information, a value, an index of a corresponding frequency domain vector, and/or an index of a spatial domain vector) about a non-zero combination coefficient in a combination coefficient matrix corresponding to a space-frequency matrix corresponding to a receive antenna, or as shown in manner (3), include a value of a non-zero combination coefficient in a combination coefficient matrix corresponding to a space-frequency matrix corresponding to a receive antenna.

If R1 is a quantity $N_{Layer}$ of spatial layers of the first terminal, $N_{Layer}$ sub-channels in a one-to-one correspondence with $N_{Layer}$ access antennas exist between the first terminal and the access network device, and the R1 pieces of sub-channel information may refer to channel information of the $N_{Layer}$ sub-channels. For example, one piece of sub-channel information may include a space-frequency matrix corresponding to one spatial layer (or referred to as a precoding matrix corresponding to the spatial layer) or information (such as position information, a value, an index of a corresponding frequency domain vector, and/or an index of a spatial domain vector) about a non-zero combination coefficient in a combination coefficient matrix corresponding to the space-frequency matrix corresponding to one spatial layer, or as shown in the manner (3), include a value of a non-zero combination coefficient in a combination coefficient matrix corresponding to a space-frequency matrix corresponding to one spatial layer.

Specifically, refer to the foregoing manner (1), manner (2), or manner (3) for determining the channel information of the first terminal.

Step 702: The first terminal reports third information and R pieces of fourth information to the access network device.

The third information may indicate all or some information in second common information in the channel information of the first terminal, where the second common information is same information and/or similar information in the R1 pieces of sub-channel information of the first terminal. For related descriptions of the same information and similar information, refer to the descriptions in the embodiment corresponding to FIG. 4.

In this embodiment of this application, the R1 pieces of sub-channel information of the first terminal may include one group of common information, or may include two or more groups of common information. Specifically, a quantity of sets of common information included in the channel information of the first terminal may be specified in advance, or may be determined and indicated to the first terminal by the access network device, or may be determined and indicated to the access network device by the first terminal.

It should be understood that, in the MU-MIMO scenario, the second common information may include same and/or similar information in information other than the first common information in the R1 pieces of sub-channel information, or the second common information may include some information in the first common information in the channel information of the first terminal. The some information is information specific to the first terminal and different from information of other terminals, but the some information is same and/or similar in the R1 pieces of sub-channel information. In a single-terminal scenario, the second common information is same and/or similar information in all channel information corresponding to R1 sub-channels of the first terminal.

In an example, the second common information may include N4 elements in the R1 pieces of sub-channel information of the first terminal, and the N4 elements are same elements or similar elements in the R1 pieces of sub-channel information. Same elements may be elements that are in different sub-channel information and that have a same position and a same value, and similar elements may be elements that are in different sub-channel information and that have a same position and a difference less than a threshold. The same elements or similar elements have a same position in the R1 pieces of sub-channel information. For example, UE 1 includes two receive antennas: a receive antenna 1 and a receive antenna 2. If positions and values of an $X^{th}$ row and a $Y^{th}$ column in a space-frequency matrix corresponding to the receive antenna 1 of the UE 1 and an $X^{th}$ row and a $Y^{th}$ column in a space-frequency matrix corresponding to the receive antenna 2 of the UE 1 are the same, elements in the $X^{th}$ row and the $Y^{th}$ column may be used as the second common information.

In another example, the sub-channel information includes a value of a non-zero combination coefficient, the R1 pieces of sub-channel information of the first terminal includes or values of $N_{Rx}$ or $N_{Layer}$ groups of non-zero combination coefficients, the second common information may be a value of a second position in the R1 pieces of sub-channel information of the first terminal, and the second position is a position that has a same position and a same value in the R1 pieces of sub-channel information. For example, the UE 1 includes two receive antennas: a receive antenna 1 and a receive antenna 2. The receive antenna 1 of the UE 1 is corresponding to values of a group of non-zero combination coefficient positions, the receive antenna 2 is corresponding to values of a group of non-zero combination coefficient positions, and the second position may be positions corresponding to common information 1 and common information 2 in FIG. 8a.

The R pieces of fourth information correspond to R pieces of sub-channel information in the R1 pieces of sub-channel information, the fourth information may indicate specific information in the sub-channel information corresponding to the fourth information, and R is a natural number less than or equal to R1. When R = 0, step 702 may be replaced with that the first terminal reports third information to the access network device.

For example, the third information may be designed with reference to a design form of the first information in the first possible design to the sixth possible design. For example, the third information includes some or all information in the second common information; or the third information includes some or all of quantized bits obtained by quantizing all information; or the third information indicates a relationship value between the second common information and reference information; or the like. For a specific design manner of the third information, refer to descriptions in the first possible design to the sixth possible design. Details are not described again. For example, if the second common information is the same information in the R1 pieces of sub-channel information of the first terminal, the third information may indicate all information in the second common information; if the second common information is the similar information in the R1 pieces of sub-channel information of the first terminal, the third information may indicate some information in the second common information, for example, indicate same bits in quantized bits obtained by quantizing the similar information.

It is to be noted that, in this embodiment of this application, before the first terminal performs step 702, the first terminal further needs to learn of one or more pieces of the following information: a quantity of sets of common information included in the channel information of the first terminal, a quantity of elements in each group of common information, a quantization parameter (such as a quantization manner and a quantity of quantized bits) of values of elements in each group of common information/values of non-zero combination coefficients, a quantity of elements in R pieces of specific information, and a quantization parameter of elements in the R pieces of specific information. All these information may be indicated to the first terminal by the access network device, or some information may be indicated to the first terminal by the access network device, and remaining information is determined by the first terminal and notified to the access network device, or is specified and indicated to the access network device and the first terminal in advance.

Step 703: The access network device receives the third information and the R pieces of fourth information, and determines the channel information of the first terminal based on the third information and the R pieces of fourth information.

For example, the access network device receives the third information reported by the first terminal, and restores all information in the second common information based on the third information. If the third information indicates the second common information, the second common information is combined with the R pieces of fourth information reported by the first terminal to obtain the channel information of the first terminal.

Further, the access network device determines, based on the channel information of the first terminal, a precoding matrix that matches the downlink channel between the first terminal and the access network device; precodes, based on the determined precoding matrix, a signal to be reported to the first terminal; and reports the precoded signal to the terminal.

Based on the method shown in FIG. 7, the terminal may report one piece of the same information in the R1 pieces of sub-channel information to the access network device. For different receive antennas of the terminal or for layer-specific information, one piece of specific information in one piece of sub-channel information is reported to the access network device. If there are a plurality of pieces of specific information in a plurality of pieces of sub-channel information, the plurality of pieces of specific information are reported to the access network device. In this way, reporting same information to the access network device repeatedly can be avoided, and signaling overheads are reduced. Optionally, when R is less than R1, for R1-R sub-channels, it may be considered that there is no specific information in the R1-R sub-channels, that is, channel information of the R1-R sub-channels may be obtained by using the second common information.

With reference to FIG. 8a and FIG. 8b, a manner in which a single terminal cooperatively reports common information in R1 pieces of sub-channel information of the terminal is described below by using an example in which the access network device transmits beamformed CSI-RS and the first terminal is UE 1.

As shown in FIG. 8a, the UE 1 has two receive antennas Rx1 and Rx2. The access network device sequentially transmits (or sends) beamformed CSI-RSs of nine ports (ports) to the UE 1. The first four beamformed CSI-RSs are a first group of common information (for example, common information 1 in FIG. 8a), the fifth and sixth beamformed CSI-RSs are a second group of common information (for example, common information 2 in FIG. 8a), the seventh and eighth beamformed CSI-RSs are Rx1-specific, and the ninth beamformed CSI-RS is Rx2-specific. In addition, the access network device indicates, to the UE 1, which information in the beamformed CSI-RS is common information, which information is specific, a quantization parameter of the common information, a quantization parameter of specific information, and the like. It is to be noted that, all these information may be indicated to the UE 1 by the access network device, or some information may be indicated to the UE 1 by the access network device, and the remaining information is determined by the UE 1 and notified to the access network device, or is specified and indicated to the access network device and the UE 1 in advance.

As shown in FIG. 8a, the UE 1 receives, by using two receive antennas Rx1 and Rx2, beamformed CSI-RSs of nine ports sequentially transmitted (or sent) by the access network device to the UE 1. The UE 1 receives, at the following positions corresponding to Rx1, the beamformed CSI-RS transmitted by the access network device: {the sixth frequency domain vector of a beam vector 1, the seventh frequency domain vector of the beam vector 1, the fourteenth frequency domain vector of the beam vector 1, the sixth frequency domain vector of a beam vector 2, the seventh frequency domain vector of the beam vector 2, the fourteenth frequency domain vector of the beam vector 2, the tenth frequency domain vector of a beam vector 2L, the eleventh frequency domain vector of the beam vector 2L}, and receives, at the following positions corresponding to Rx2, the beamformed CSI-RS transmitted by the access network device: {the sixth frequency domain vector of the beam vector 1, the seventh frequency domain vector of the beam vector 1, the sixth frequency domain vector of the beam vector 2, the seventh frequency domain vector of the beam vector 2, the tenth frequency domain vector of the beam vector 2L, the eleventh frequency domain vector of the beam vector 2L, the fourteenth frequency domain vector of the beam vector 2L}.

As shown in FIG. 8a, a non-zero combination coefficient position corresponds to a pattern filling part, non-zero combination coefficient positions {the sixth frequency domain vector of the beam vector 1, the seventh frequency domain vector of the beam vector 1, the sixth frequency domain vector of the beam vector 2, the seventh frequency domain vector of the beam vector 2} correspond to the common information 1, and non-zero combination coefficient positions {the tenth frequency domain vector of the beam vector 2L, the eleventh frequency domain vector of the beam vector 2L} correspond to the common information 2. Specific information corresponding to Rx1 is values of non-zero combination coefficient positions {a fourteenth frequency domain vector of the beam vector 1, a fourteenth frequency domain vector of the beam vector 2}, and specific information corresponding to Rx2 is a value of a non-zero combination coefficient position: a fourteenth frequency domain vector of the beam vector 2L.

As shown in FIG. 8b, after quantizing $a^r_{i,j}$ in the common information 1, the UE 1 obtains $N^c_1$ binary bit strings with lengths of 7. 5 high-order bits of the $N^c_1$ binary bit strings are the same. The UE 1 may feed back only one copy of 5 high-order binary bits $B^c_{1.2}$ to the access network device. Similarly, after quantizing $a^r_{i,j}$ in the common information 2, the UE 1 obtains $N^c_2$ binary bit strings with lengths of 6. 4 high-order bits of the $N^c_2$ binary bit strings are the same. The UE 1 may feed back only one copy of 4 high-order binary bits to the access network device, the remaining low-order bits are different for the receive antenna Rx1 and the receive antenna Rx2, and the UE 1 feeds back one copy of low-order bits for each receive antenna Rx. In addition, for specific information $N^s_1$ of the receive antenna Rx1, the UE 1 feeds back one copy of low-order bits, and for specific information $N^s_2$ of the receive antenna Rx2, the UE 1 feeds back one copy of low-order bits.

With reference to FIG. 8c and FIG. 8d, a manner in which a plurality of terminals cooperatively report the common information is described below with reference to the manner in which a single terminal cooperatively reports common information in plurality of pieces of sub-channel information of the terminal, and by using an example in which the access network device transmits beamformed CSI-RS, the first terminal is UE 1, and the second terminal is UE 2.

As shown in FIG. 8c, the access network device sequentially transmits (or sends) beamformed CSI-RSs of nine ports (ports) to the UE 1 and the UE 2. The first four beamformed CSI-RSs are a first group of common information (for example, common information 1 in FIG. 8c), the fifth and sixth beamformed CSI-RSs are a second group of common information (for example, common information 2 in FIG. 8c), the seventh and eighth beamformed CSI-RSs are UE 1-specific, and the ninth beamformed CSI-RS is UE 2-specific. In addition, the access network device indicates, to the UE 1 and the UE 2, which information in the beamformed CSI-RS is common information, which information is specific, a quantization parameter of the common information, a quantization parameter of specific information, and the like. It is to be noted that, all these information may be indicated to the UE 1 and the UE 2 by the access network device, or some information may be indicated to the UE 1 and the UE 2 by the access network device, and the remaining information is determined by the UE 1 and the UE 2 and notified to the access network device, or is specified and indicated to the access network device, the UE 1, and the UE 2 in advance.

As shown in FIG. 8c, the UE 1 and the UE 2 receive, by using receive antennas, beamformed CSI-RSs of nine ports sequentially transmitted (or sent) by the access network device. The UE 1 receives, at the following positions, the beamformed CSI-RS transmitted by the access network device: {the sixth frequency domain vector of a beam vector 1, the seventh frequency domain vector of the beam vector 1, the fourteenth frequency domain vector of the beam vector 1, the sixth frequency domain vector of a beam vector 2, the seventh frequency domain vector of the beam vector 2, the fourteenth frequency domain vector of the beam vector 2, the tenth frequency domain vector of a beam vector 2L, the eleventh frequency domain vector of the beam vector 2L}, and the UE 2 receives, at the following positions, the beamformed CSI-RS transmitted by the access network device: {the sixth frequency domain vector of the beam vector 1, the seventh frequency domain vector of the beam vector 1, the sixth frequency domain vector of the beam vector 2, the seventh frequency domain vector of the beam vector 2, the tenth frequency domain vector of the beam vector 2L, the eleventh frequency domain vector of the beam vector 2L, the fourteenth frequency domain vector of the beam vector 2L}.

As shown in FIG. 8c, a non-zero combination coefficient position corresponds to a pattern filling part, non-zero combination coefficient positions {the sixth frequency domain vector of the beam vector 1, the seventh frequency domain vector of the beam vector 1, the sixth frequency domain vector of the beam vector 2, the seventh frequency domain vector of the beam vector 2} correspond to the common information 1, and non-zero combination coefficient positions {the tenth frequency domain vector of the beam vector 2L, the eleventh frequency domain vector of the beam vector 2L} correspond to the common information 2. Specific information corresponding to the UE 1 is values of non-zero combination coefficient positions {a fourteenth frequency domain vector of the beam vector 1, a fourteenth frequency domain vector of the beam vector 2}, and specific information corresponding to the UE 2 is a value of a non-zero combination coefficient position: a fourteenth frequency domain vector of the beam vector 2L.

As shown in FIG. 8d, after $a_{i,j}^r$ in the common information 1 is quantized, $N_1^\pounds$ binary bit strings with lengths of 11 are obtained. 5 high-order bits $B_{1.2}^c$ of the $N_1^\pounds$ binary bit strings are the same for the UE 1 and the UE 2, and may be fed back by the UE 1 and the UE 2 cooperatively. For example, the UE 1 or the UE 2 feeds back $B_{1.2}^c$, or the UE 1 feeds back some bits of $B_{1.2}^c$, for example, the first 3 bits, and the UE 2 feeds back some bits, for example, the last 2 bits of 5 high-order bits of $B_{1.2}^c$. The last 6 bits of the $N_1^\pounds$ binary bit strings are different for the UE 1 and the UE 2, and the UE 1 and the UE 2 respectively feed back their respective last 6 bits. For the UE 1, the first 4 bits of the last 6 bits are same information in a plurality of pieces of sub-channel information of the UE 1. Therefore, the UE 1 needs to feed back the first 4 bits of the last 6 bits to the access network device. The last 2 bits of the last 6 bits are different for different receive antennas Rxs of the UE 1. In this case, the UE 1 feeds back one copy of the last 2 bits for each receive antenna Rx.

Similarly, after $a_{i,j}^r$ in the common information 2 is quantized, $N_2^\pounds$ binary bit strings with lengths of 8 are obtained. 4 high-order bits of the $N_2^\pounds$ binary bit strings are the same for the UE 1 and the UE 2, and may be fed back by the UE 1 and the UE 2 cooperatively. For example, the UE 1 or the UE 2 feeds back the 4 high-order bits, or the UE 1 feeds back some bits, for example, the first 2 bits, and the UE 2 feeds back some bits, for example, the last 2 bits of the 4 high-order bits. The last 4 bits of the $N_2^\pounds$ binary bit strings are different for the UE 1 and the UE 2, and the UE 1 and the UE 2 respectively feed back their respective last 4 bits. For the UE 1, the first 2 bits of the last 4 bits of the $N_2^c$ binary bit strings are same information in a plurality of pieces of sub-channel information corresponding to a plurality of receive antennas Rxs of the UE 1. Therefore, the UE 1 needs to feed back the first 2 bits of the last 4 bits to the access network device. The last 2 bits of the last 4 bits are different for different receive antennas Rxs of the UE 1. In this case, the UE 1 feeds back one copy of the last 2 bits for each receive antenna Rx.

In addition, for specific information of the UE 1, $N_1^\pounds$ bit strings with lengths of 5 are different for different receive antennas Rxs of the UE 1, and the first 3 bits in the bit strings with lengths of 5 are same information in plurality of pieces of sub-channel information corresponding to a plurality of receive antennas Rxs of the UE 1. In this case, the UE 1 feeds back one copy of the first 3 bits to the access network device. The last 2 bits are different for different receive antennas Rxs of the UE 1. In this case, the UE 1 feeds back one copy of the last 2 bits for each receive antenna Rx. For specific information of the UE 2, $N_2^\pounds$ bit strings with lengths of 5 are different for different receive antennas Rxs of the UE 2, and the first 2 bits $B_{2.2}^s$ in the bit strings with lengths of 5 are same information in plurality of pieces of sub-channel information corresponding to a plurality of receive antennas Rxs of the UE 2. In this case, the UE 2 feeds back one copy of $B_{2.2}^s$ to the access network device. The last 3 bits are different for different receive antennas Rxs of the UE 2. In this case, the UE 2 feeds back one copy of the last 3 bits for each receive antenna Rx.

The foregoing mainly describes the solutions provided in embodiments of this application from a perspective of interaction between the nodes. It may be understood that to implement the foregoing functions, the nodes, for example, the access network device and the terminal, include corresponding hardware structures and/or software modules for implementing the functions. A person skilled in the art should be easily aware that, in combination with algorithm steps of the examples described in embodiments disclosed in this specification, the method in embodiments of this application may be implemented by hardware, software, or a combination of hardware and computer software. Whether a function is executed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the access network device and the terminal may be divided into function modules based on the foregoing method examples. For example, function modules corresponding to the functions may be obtained through division, or two or more functions may be integrated into one processing module. The integrated module may be implemented in a form of hardware, or may be implemented in a form of a software functional module. It is to be noted that, in this embodiment of this application, division into the modules is an example, and is merely a logical function division. In actual implementation, another division manner may be used.

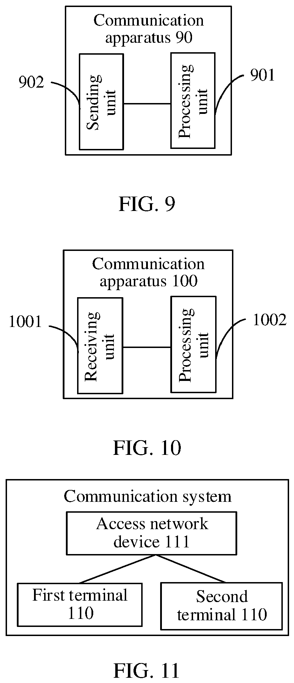

FIG. 9 is a diagram of a structure of a communication apparatus 90. The communication apparatus 90 may be a first terminal, a chip or a system on chip in a first terminal, another apparatus that can implement functions of the first terminal in the foregoing method, or the like. The communication apparatus 90 may be configured to perform the functions of the first terminal in the foregoing method embodiments. In an implementation, the communication apparatus 90 shown in FIG. 9 includes a processing unit 901 and a sending unit 902.

In a possible design, the processing unit 901 is configured to determine channel information of the first terminal. For example, the processing unit 901 is configured to support the communication apparatus 90 in performing step 401.

The sending unit 902 is configured to report first information to an access network device, where the first information indicates some or all information in first common information in the channel information of the first terminal and channel information of a second terminal, and the channel information of the second terminal indicates a channel state of a downlink channel between the second terminal and the access network device. For example, the sending unit 902 is configured to support the communication apparatus 90 in performing step 402.

Specifically, all related content of the steps in the foregoing method embodiments in FIG. 4 may be cited in function descriptions of the corresponding functional modules. Details are not described herein again. The communication apparatus 90 is configured to perform a function of the first terminal in the channel information reporting method shown in the method shown in FIG. 4, and therefore can achieve a same effect as the foregoing channel information reporting method.

In another possible design, the processing unit 901 is configured to determine channel information of the first terminal. For example, the processing unit 901 is configured to support the communication apparatus 90 in performing step 701.

The sending unit 902 is configured to report third information and R pieces of fourth information to the access network device, where the third information indicates all or some information in second common information in the channel information of the first terminal, the R pieces of fourth information correspond to R pieces of sub-channel information in R1 pieces of sub-channel information, the fourth information indicates specific information in sub-channel information corresponding to the fourth information, and R is a natural number less than or equal to R1. For example, the sending unit 902 is configured to support the communication apparatus 90 in performing step 702.

Specifically, all related content of the steps in the foregoing method embodiments in FIG. 7 may be cited in function descriptions of the corresponding functional modules. Details are not described herein again. The communication apparatus 90 is configured to perform a function of the first terminal in the channel information reporting method shown in the method shown in FIG. 7, and therefore can achieve a same effect as the foregoing channel information reporting method.

In another implementation, the communication apparatus 90 shown in FIG. 9 includes a processing module and a communication module. The processing module is configured to control and manage an action of the communication apparatus 90. For example, the processing module may integrate a function of the processing unit 901, and may be configured to support the communication apparatus 90 in performing step 401, step 701, and another process of the technology described in this specification. The communication module may integrate a function of the sending unit 902, and may be configured to support the communication apparatus 90 in performing step 402 and step 702 and communicating with another network entity, for example, communicating with a functional module or a network entity shown in FIG. 2. The communication apparatus 90 may further include a storage module, configured to store instructions and/or data. When the instructions are executed by the processing module, the processing module is enabled to implement the method on a first terminal side.

The processing module may be a processor, a controller, a module, or a circuit. The processing module may implement or execute various example logical blocks described with reference to content disclosed in this application. The communication module may be a transceiver circuit, a pin, an interface circuit, a bus interface, a communication interface, or the like. The storage module may be a memory. When the processing module is a processor, the communication module is a communication interface, and the storage module is a memory, the communication apparatus 90 in this embodiment of this application is the communication apparatus shown in FIG. 3.

In this embodiment of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor, any conventional processor, or the like. The steps of the method disclosed with reference to this embodiment of this application may be directly performed and completed by a hardware processor, or may be performed and completed by a combination of hardware and software modules in the processor.

In this embodiment of this application, the memory may be a non-volatile memory, such as a hard disk drive (hard disk drive, HDD) or a solid-state drive (solid-state drive, SSD), or may be a volatile memory (volatile memory), such as a random access memory (random access memory, RAM). The memory is any other medium that can carry or store expected program code in a form of instructions or a data structure and that can be accessed by a computer, but is not limited thereto. The memory in this embodiment of this application may alternatively be a circuit or any other apparatus that can implement a storage function, and is configured to store instructions and/or data.

FIG. 10 is a diagram of a structure of a communication apparatus 100. The communication apparatus 100 may be an access network device, a chip or a system on chip in an access network device, another apparatus that can implement functions of the access network device in the foregoing method, or the like. The communication apparatus 100 may be configured to perform the functions of the access network device in the foregoing method embodiments. The communication apparatus 100 may be configured to perform the functions of the access network device in the foregoing method embodiments. In an implementation, the communication apparatus 100 shown in FIG. 10 includes a receiving unit 1001 and a receiving unit 1002.

The receiving unit 1001 is configured to receive first information from a first terminal, where the first information indicates some or all information in first common information in channel information of the first terminal and channel information of a second terminal, the channel information of the first terminal indicates a channel state of a downlink channel between the first terminal and the access network device, and the channel information of the second terminal indicates a channel state of a downlink channel between the second terminal and the access network device. For example, the receiving unit 1001 may be configured to support the communication apparatus 100 in performing step 403.

The processing unit 1002 is configured to determine first common information in the channel information of the first terminal based on the first information reported by the first terminal. For example, the processing unit 1002 may be configured to support the communication apparatus 100 in performing step 403.

Specifically, all related content of the steps in the foregoing method embodiments in FIG. 4 may be cited in function descriptions of the corresponding functional modules. Details are not described herein again. The communication apparatus 100 is configured to perform a function of the access network device in the channel information reporting method shown in the method shown in FIG. 4, and therefore can achieve a same effect as the foregoing channel information reporting method.

The receiving unit 1001 is configured to receive third information and R pieces of fourth information reported by the first terminal, where the third information indicates all or some information in second common information in the channel information of the first terminal, the R pieces of fourth information correspond to R pieces of sub-channel information in R1 pieces of sub-channel information, the fourth information indicates specific information in sub-channel information corresponding to the fourth information, and R is a natural number less than or equal to R1. For example, the receiving unit 1001 may be configured to support the communication apparatus 100 in performing step 703.

The processing unit 1002 is configured to determine the channel information of the first terminal based on the third information and the R pieces of fourth information reported by the first terminal. For example, the processing unit 1002 may be configured to support the communication apparatus 100 in performing step 703.

Specifically, all related content of the steps in the foregoing method embodiments in FIG. 4 may be cited in function descriptions of the corresponding functional modules. Details are not described herein again. The communication apparatus 100 is configured to perform a function of the access network device in the channel information reporting method shown in the method shown in FIG. 4, and therefore can achieve a same effect as the foregoing channel information reporting method.

In another implementation, the communication apparatus 100 shown in FIG. 10 includes a processing module and a communication module. The processing module is configured to control and manage an action of the communication apparatus 100. For example, the processing module may integrate a function of the processing unit 1002, and may be configured to support the communication apparatus 100 in performing step 403, step 703, and an action that is of the access network device described in this specification and that is other than sending and receiving actions. The communication module may integrate a function of the receiving unit 1001, and may be configured to support the communication apparatus 100 in performing step 403 and step 703 and communicating with another network entity, for example, communicating with a functional module or a network entity shown in FIG. 2. The communication apparatus 100 may further include a storage module, configured to store instructions and/or data of the communication apparatus 100. When the instructions are executed by the processing module, the processing module is enabled to implement the method on an access network device side.

The processing module may be a processor, a controller, a module, or a circuit. The processing module may implement or execute various example logical blocks described with reference to content disclosed in this application. Alternatively, the processor may be a combination of processors implementing a computing function, for example, a combination of one or more microprocessors, or a combination of a DSP and a microprocessor. The communication module may be a transceiver circuit, a pin, an interface circuit, a bus interface, a communication interface, or the like. The storage module may be a memory. When the processing module is a processor, the communication module is a communication interface, and the storage module is a memory, the communication apparatus 100 in this embodiment of this application may be the communication apparatus shown in FIG. 3.

FIG. 11 is a diagram of a structure of a communication system according to an embodiment of this application. As shown in FIG. 11, the communication system includes a plurality of terminals 110 and an access network device 111. The plurality of terminals 110 may cooperatively report common information in channel information.

The terminals 110 may have a function of the communication apparatus 90. The access network device 111 may have a function of the communication apparatus 100.

For example, a first terminal 110 determines channel information of the first terminal 110, and reports first information to the access network device 111, where the first information indicates some or all information in first common information in the channel information of the first terminal 110 and channel information of a second terminal 110, the channel information of the first terminal 110 indicates a channel state of a downlink channel between the first terminal 110 and the access network device 111, and the channel information of the second terminal 110 indicates a channel state of a downlink channel between the second terminal 110 and the access network device 111.

The access network device 111 is configured to: receive the first information reported by the first terminal 110, and determine the first common information in the channel information of the first terminal 110 based on the first information.

Similarly, the method performed by the second terminal 110 is similar to the method performed by the first terminal 110. For example, a second terminal 110 determines channel information of the second terminal 110, and reports first information to the access network device 111, where the first information indicates some or all information in first common information in the channel information of the second terminal 110 and channel information of a first terminal 110, the channel information of the first terminal 110 indicates a channel state of a downlink channel between the first terminal 110 and the access network device 111, and the channel information of the second terminal 110 indicates a channel state of a downlink channel between the second terminal 110 and the access network device 111. Information reported by the first terminal 110 and the second terminal 110 may be the same, or may be different, or may be partially the same and partially different. This is not limited.

Specifically, for a specific implementation process of the terminal 110, refer to the execution process of the first terminal in the method embodiment in FIG. 4. Details are not described herein again. For a specific implementation process of the access network device 111, refer to the execution process of the access network device 111 in the method embodiment in FIG. 4. Details are not described herein again.

It is to be noted that, in the specification, the claims, and the accompanying drawings of this application, the terms "first", "second", and the like are intended to distinguish between different objects but do not indicate a particular order. In addition, the terms "including" and "having" and any other variants thereof are intended to cover a non-exclusive inclusion. For example, a process, method, system, product, or device that includes a series of steps or units is not limited to the listed steps or units, but optionally further includes an unlisted step or unit, or optionally further includes another inherent step or unit of the process, method, product, or device.

It should be understood that, in embodiments of this application, "at least one (item)" means one or more, "a plurality of" means two or more, "at least two (items)" means two, three, or more, and "and/or" is used to describe an association relationship between associated objects, and indicates that there may be three relationships. For example, "A and/or B" may indicate that only A exists, only B exists, and both A and B exist, where A and B may be singular or plural. The character "/" usually indicates an "or" relationship between the associated objects. "At least one of the following items (pieces)" or a similar expression thereof refers to any combination of these items, including any combination of singular items (pieces) or plural items (pieces). For example, at least one of a, b, or c may indicate a, b, c, a and b, a and c, b and c, or a, b, and c, where a, b, and c may be singular or plural.

It should be understood that in embodiments of this application, "B corresponds to A" indicates that B is associated with A. For example, B may be determined based on A. It should be further understood that determining B based on A does not mean that B is determined based on only A. B may alternatively be determined based on A and/or other information. In addition, "connection" in embodiments of this application refers to various connection manners such as a direct connection and an indirect connection, for implementing communication between devices. This is not limited in embodiments of this application.

Unless otherwise specified, "transmit/transmission" (transmit/transmission) in embodiments of this application refers to bidirectional transmission, and includes a sending action and/or a receiving action. Specifically, "transmit/transmission" in embodiments of this application includes data sending, data receiving, or data sending and data receiving. In other words, data transmission herein includes uplink and/or downlink signal transmission. The data may include a channel and/or a signal. The uplink data transmission is uplink channel transmission and/or uplink signal transmission, and the downlink signal transmission is downlink channel transmission and/or downlink signal transmission. In embodiments of this application, a "network" and a "system" express a same concept, and a communication system is a communication network.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

All or some of the technical solutions in embodiments of this application may be implemented by using software, hardware, firmware, or any combination thereof. When software is used to implement the technical solutions, all or a part of the technical solutions may be implemented in a form of a computer program product. The computer program product includes one or more computer instructions. When the computer program instructions are loaded and executed on a computer, all or some of the procedures or functions according to embodiments of the present invention are generated. The computer may be a general-purpose computer, a dedicated computer, a computer network, an access network device, a terminal device, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium, or the like.

In embodiments of this application, on a premise that there is no logical contradiction, the embodiments may be mutually referenced. For example, methods and/or terms in the method embodiments may be mutually referenced, functions and/or terms in the apparatus embodiments may be mutually referenced, and functions and/or terms in the apparatus embodiments and the method embodiments may be mutually referenced.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

**Claims**

1. A channel information reporting method, wherein the method comprises:

    determining channel information of a first terminal, wherein the channel information of the first terminal indicates a channel state of a downlink channel between the first terminal and an access network device; and
    reporting first information to the access network device, wherein the first information indicates some or all information in first common information in the channel information of the first terminal and channel information of a second terminal, and the channel information of the second terminal indicates a channel state of a downlink channel between the second terminal and the access network device.

2. The method according to claim 1, wherein the channel information of the first terminal comprises N1 elements, the channel information of the second terminal comprises N2 elements, and N1 and N2 are integers greater than or equal to 1; and
   the first common information comprises N3 elements, the N3 elements are same elements and/or similar elements in the N1 elements of the first terminal and the N2 elements of the second terminal, the same elements are elements that are in the N1 elements and the N2 elements and that have a same position and a same value, and the similar elements are elements that are in the N1 elements and the N2 elements and that have a same position and a difference less than a threshold.

3. The method according to claim 1, wherein the channel information of the first terminal comprises R1 pieces of sub-channel information, the channel information of the second terminal comprises R2 pieces of sub-channel information, and R1 and R2 are integers greater than or equal to 1; and
   the first common information comprises a value of a first position in the R1 pieces of sub-channel information of the first terminal and the R2 pieces of sub-channel information of the second terminal.

4. The method according to any one of claims 1 to 3, wherein that the first information indicates some or all information in first common information in the channel information of the first terminal and channel information of a second terminal comprises:

    the first information comprises the some or all information in the first common information;
    the first information comprises quantized bits obtained by quantizing the some or all information;

the first information comprises some or all bits in quantized bits obtained by quantizing all the information;

the first information indicates a relationship value between the first common information and reference information;

the first information indicates a relationship value between some information in the first common information and some information in reference information; or

the first information comprises a relationship value between a first part of bits and a second part of bits, the first part of bits are some bits in quantized bits obtained by quantizing the first common information, and the second part of bits are some bits in quantized bits obtained by quantizing the reference information, wherein

the reference information is channel information of a third terminal, and the channel information of the third terminal indicates a channel state of a downlink channel between the third terminal and the access network device.

5. The method according to any one of claims 1 to 4, wherein the method further comprises:
reporting second information to the access network device, wherein the second information is specific information in the channel information of the first terminal.

6. The method according to claim 5, wherein the channel information of the first terminal comprises the R1 pieces of sub-channel information, and R1 is an integer greater than or equal to 1; and
the second information comprises third information and R pieces of fourth information, wherein the third information indicates all or some information in second common information in the channel information of the first terminal, the second common information is common information of the R1 pieces of sub-channel information, the R pieces of fourth information correspond to R pieces of sub-channel information in the R1 pieces of sub-channel information, the fourth information indicates specific information in sub-channel information corresponding to the fourth information, and R is an integer greater than or equal to 0 and less than or equal to R1.

7. The method according to claim 6, wherein

the second common information comprises a value of an element at a second position in the R1 pieces of sub-channel information; and/or

the second common information is a first part of information in the first common information, and the first part of information is same and/or similar information in the R1 pieces of sub-channel information.

8. The method according to any one of claims 1 to 7, wherein the method further comprises:

receiving second indication information, wherein the second indication information indicates a compression parameter of a first compressor, and
the first compressor is configured to compress the first information.

9. The method according to any one of claims 1 to 8, wherein the method further comprises:
receiving third indication information, wherein the third indication information indicates the third terminal to join a terminal group, and the terminal group comprises the first terminal and the second terminal.

10. The method according to any one of claims 1 to 9, wherein the method further comprises:
receiving fourth indication information, wherein the fourth indication information indicates a fourth terminal to exit a terminal group, and the terminal group comprises the first terminal, the second terminal, and the fourth terminal.

11. The method according to any one of claims 1 to 10, wherein before the first terminal joins the terminal group, the method further comprises:
receiving fifth indication information, wherein the fifth indication information indicates an existing terminal in the terminal group.

12. A channel information reporting method, wherein the method comprises:

receiving first information from a first terminal, wherein the first information indicates some or all information in first common information in channel information of the first terminal and channel information of a second terminal, the channel information of the first terminal indicates a channel state of a downlink channel between the first terminal and an access network device, and the channel information of the second terminal indicates a channel state of a downlink channel between the second terminal and the access network device; and

determining the first common information based on the first information.

**13.** The method according to claim 12, wherein the channel information of the first terminal comprises N1 elements, the channel information of the second terminal comprises N2 elements, and N1 and N2 are integers greater than or equal to 1; and
the first common information comprises N3 elements, the N3 elements are same elements and/or similar elements in the N1 elements of the first terminal and the N2 elements of the second terminal, the same elements are elements that are in the N1 elements and the N2 elements and that have a same position and a same value, and the similar elements are elements that are in the N1 elements and the N2 elements and that have a same position and a difference less than a threshold.

**14.** The method according to claim 12, wherein the channel information of the first terminal comprises R1 pieces of sub-channel information, the channel information of the second terminal comprises R2 pieces of sub-channel information, and R1 and R2 are integers greater than or equal to 1; and
the first common information comprises a value of a first position in the R1 pieces of sub-channel information of the first terminal and the R2 pieces of sub-channel information of the second terminal.

**15.** The method according to any one of claims 12 to 14, wherein that the first information indicates some or all information in first common information in the channel information of the first terminal and channel information of a second terminal comprises:

the first information comprises the some or all information in the first common information;
the first information comprises quantized bits obtained by quantizing the some or all information;
the first information comprises some or all bits in quantized bits obtained by quantizing all the information;
the first information indicates a relationship value between the first common information and reference information;
the first information indicates a relationship value between some information in the first common information and some information in reference information; or
the first information comprises a relationship value between a first part of bits and a second part of bits, the first part of bits are some bits in quantized bits obtained by quantizing the first common information, and the second part of bits are some bits in quantized bits obtained by quantizing the reference information, wherein the reference information is channel information of a third terminal, and the channel information of the third terminal indicates a channel state of a downlink channel between the third terminal and the access network device.

**16.** The method according to any one of claims 12 to 15, wherein the method further comprises:

receiving second information from the first terminal, wherein the second information is specific information in the channel information of the first terminal; and
determining the channel information of the first terminal based on the first common information and the second information.

**17.** The method according to claim 16, wherein the channel information of the first terminal comprises the R1 pieces of sub-channel information, and R1 is an integer greater than or equal to 1; and
the second information comprises third information and R pieces of fourth information, wherein the third information indicates all or some information in second common information in the channel information of the first terminal, the second common information is common information of the R1 pieces of sub-channel information, the R pieces of fourth information correspond to R pieces of sub-channel information in the R1 pieces of sub-channel information, the fourth information indicates specific information in sub-channel information corresponding to the fourth information, and R is a natural number greater than or equal to 0 and less than or equal to R1.

**18.** The method according to claim 17, wherein

the second common information comprises a value of an element at a second position in the R1 pieces of sub-channel information; and/or
the second common information is a first part of information in the first common information, and the first part of information is same and/or similar information in the R1 pieces of sub-channel information.

**19.** The method according to any one of claims 12 to 18, wherein the method further comprises:
sending second indication information to the first terminal, wherein the second indication information indicates a compression parameter of a first compressor, and the first compressor is configured to compress the first information.

**20.** The method according to any one of claims 12 to 19, wherein the method further comprises:
sending third indication information to the first terminal, wherein the third indication information indicates the third terminal to join a terminal group, and the terminal group comprises the first terminal and the second terminal.

**21.** The method according to any one of claims 12 to 20, wherein the method further comprises:
sending fourth indication information to the first terminal, wherein the fourth indication information indicates a fourth terminal to exit a terminal group, and the terminal group comprises the first terminal, the second terminal, and the fourth terminal.

**22.** The method according to any one of claims 12 to 21, wherein before the first terminal joins the terminal group, the method further comprises:
sending fifth indication information to the first terminal, wherein the fifth indication information indicates an existing terminal in the terminal group.

**23.** A communication system, wherein the communication system comprises:

a first terminal, configured to: determine channel information of the first terminal, and report first information to an access network device, wherein the first information indicates some or all information in first common information in the channel information of the first terminal and channel information of a second terminal, the channel information of the first terminal indicates a channel state of a downlink channel between the first terminal and the access network device, and the channel information of the second terminal indicates a channel state of a downlink channel between the second terminal and the access network device; and
the access network device, configured to: receive the first information from the first terminal, and determine the first common information based on the first information.

**24.** A channel information reporting method, wherein the method comprises:

determining channel information of a terminal, wherein the channel information of the terminal indicates a channel state of a downlink channel between the terminal and an access network device, the channel information of the terminal comprises R1 pieces of sub-channel information, and R1 is an integer greater than or equal to 1; and
reporting third information to the access network device, wherein the third information indicates all or some information in second common information in the channel information of the terminal, the second common information is common information of the R1 pieces of sub-channel information.

**25.** The method according to claim 24, wherein the method further comprises:
reporting R pieces of fourth information to the access network device, wherein the R pieces of fourth information correspond to R pieces of sub-channel information in the R1 pieces of sub-channel information, the fourth information indicates specific information in sub-channel information corresponding to the fourth information, and R is an integer greater than or equal to 0 and less than or equal to R1.

**26.** A channel information reporting method, wherein the method comprises:

receiving third information from a terminal, wherein
the third information indicates all or some information in second common information in channel information of the terminal, the channel information of the terminal indicates a channel state of a downlink channel between the terminal and an access network device, the channel information of the terminal comprises R1 pieces of sub-channel information, R1 is an integer greater than or equal to 1, and the second common information is common information of the R1 pieces of sub-channel information.

**27.** The method according to claim 26, wherein the method further comprises:
receiving R pieces of fourth information from the terminal, wherein the R pieces of fourth information correspond to R pieces of sub-channel information in the R1 pieces of sub-channel information, the fourth information indicates specific information in sub-channel information corresponding to the fourth information, and R is an integer greater than or equal to 0 and less than or equal to R1.

28. A communication apparatus, configured to perform the channel information reporting method according to any one of claims 1 to 11, 24, and 25.

29. A communication apparatus, comprising a processor and a memory, wherein the memory is coupled to the processor, and the processor is configured to perform the channel information reporting method according to any one of claims 1 to 11, 24, and 25.

30. A communication apparatus, comprising a processor and a communication interface, wherein the processor determines channel information of a first terminal, and reports first information to an access network device through the communication interface, wherein
the first information indicates some or all information in first common information in channel information of the first terminal and channel information of a second terminal, the channel information of the first terminal indicates a channel state of a downlink channel between the first terminal and an access network device, and the channel information of the second terminal indicates a channel state of a downlink channel between the second terminal and the access network device.

31. A communication apparatus, comprising a processor and a communication interface, wherein the processor determines channel information of a terminal, and
sends third information to an access network device through the communication interface, wherein the third information indicates all or some information in second common information in channel information of the terminal, the channel information of the terminal indicates a channel state of a downlink channel between the terminal and the access network device, the channel information of the terminal comprises R1 pieces of sub-channel information, R1 is an integer greater than or equal to 1, and the second common information is common information of the R1 pieces of sub-channel information.

32. A communication apparatus, configured to perform the channel information reporting method according to any one of claims 12 to 22, 26, and 27.

33. A communication apparatus, wherein the communication apparatus comprises a processor and a memory, wherein the memory is coupled to the processor, and the processor is configured to perform the channel information reporting method according to any one of claims 12 to 22, 26, and 27.

34. A communication apparatus, comprising a processor and a communication interface, wherein

the processor receives, through the communication interface, first information reported by a first terminal, wherein the first information indicates some or all information in first common information in channel information of the first terminal and channel information of a second terminal, the channel information of the first terminal indicates a channel state of a downlink channel between the first terminal and an access network device, and the channel information of the second terminal indicates a channel state of a downlink channel between the second terminal and the access network device; and
the processor is configured to: determine the first common information based on the first information.

35. A communication apparatus, comprising a processor and a communication interface, wherein

the processor receives third information from a terminal through the communication interface, wherein the third information indicates all or some information in second common information in channel information of the terminal, the channel information of the terminal indicates a channel state of a downlink channel between the terminal and an access network device, the channel information of the terminal comprises R1 pieces of sub-channel information, R1 is an integer greater than or equal to 1, and the second common information is common information of the R1 pieces of sub-channel information; and
the processor is configured to: determine the second common information based on the third information.

36. A computer-readable storage medium, wherein the computer-readable storage medium stores computer instructions; and when the computer instructions are run on a computer, the computer is enabled to perform the channel information reporting method according to any one of claims 1 to 22 and 24 to 27.

37. A computer program product, wherein the computer program product comprises computer instructions; and when the computer instructions are run on a computer, the computer is enabled to perform the channel information reporting method according to any one of claims 1 to 22 and 24 to 27.

38. A communication system, wherein the communication system comprises:

a terminal, configured to: determine a channel information of the terminal; and report third information to an access network device, wherein the channel information of the terminal indicates a channel state of a downlink channel between the terminal and the access network device, the channel information of the terminal comprises R1 pieces of sub-channel information, R1 is an integer greater than or equal to 1, the third information indicates some or all information in second common information in the channel information of the terminal, and the second common information is common information of the R1 pieces of sub-channel information; and
the access network device, configured to: receive the third information from the terminal, and determine the second common information based on the third information.

Channel matrix
of a frequency
domain unit 1 ----

Channel matrix
of a frequency
domain unit $N_f$

Transmit
antenna

Receive
antenna/Layer

Frequency
domain unit

Spatial-frequency matrix $W^r$

FIG. 1a

Receive
antenna Rx1

Beam
vector 1

Beam
vector 2

Beam
vector 2L

Receive
antenna Rx2

Beam
vector 1

Beam
vector 2

Beam
vector 2L

FIG. 1b

FIG. 2

Access network device

$N1*N2$

Nt

Terminal

$N_R$

FIG. 2a

300

Processor 301

Processor 307

CPU 0

CPU 1

CPU 0

CPU 1

Communication
line 302

Memory 304

Communication
interface 303

Output device 305

Input device 306

FIG. 3

EP 4 224 905 A1

FIG. 4

FIG. 5a

46

FIG. 5b

FIG. 5c

$$A(1)''+A(2)''+...+A(N-1)''+A(N)''=A'$$

FIG. 5d

$$A(1)+A2+...+A(N-1)=A$$
Reference information is S

FIG. 5e

FIG. 6a

FIG. 6b

FIG. 7

Receive antenna Rx1

Beam vector 1

Beam vector 2

Beam vector 2L

Receive antenna Rx2

Beam vector 1

Beam vector 2

Beam vector 2L

Common information 1

Specific information of Rx1

Common information 2

Specific information of Rx2

**FIG. 8a**

Common information 1

Common information 2

Specific information corresponding to Rx1

Specific information corresponding to Rx2

$B_i^n$

Bit

$N_1^c$

$N_2^c$

$N_1^s$

$N_2^s$

When all Rxs are the same, feed back one copy of bits

When Rxs are different, feed back one copy of bits for each Rx

For specific information of Rxs, feed back one copy of bits for each Rx

**FIG. 8b**

Beam
vector 1

Beam
vector 2

UE 1

Beam
vector 2L

Beam
vector 1

Beam
vector 2

UE 2

Beam
vector 2L

Common
information 1

Specific
information
of UE 1

Common
information 2

Specific
information
of UE 2

FIG. 8c

Common
information 1

Common
information 2

Specific
information
of UE 1

Specific
information
of UE 2

$B_{1,2}^c$

$B_{1,1}^s$

$B_{1,3,u}^c$

$B_{1,1}^s$

$B_{2,1}^s$

$N_1^s$

$N_1^c$

$N_2^s$

Bit

When all Rxs of all UEs are the same, one
or more UEs feed back one copy of bits

When all Rxs of each UE are the same,
each UE feeds back one copy of bits

When Rxs of each UE are different, each
UE feeds back one copy of bits for each Rx

Corresponding UE feeds back
one copy of bits for all Rxs

When Rxs of corresponding UE are
different, the UE feeds back one
copy of bits for each Rx

FIG. 8d

Communication
apparatus 90

902 — Sending unit | Processing unit ⁀ 901

FIG. 9

Communication
apparatus 100

1001 — Receiving unit | Processing unit ⁀ 1002

FIG. 10

Communication system

Access network
device 111

First terminal
110

Second
terminal 110

FIG. 11

## INTERNATIONAL SEARCH REPORT

| International application No. |
|---|
| **PCT/CN2020/125680** |

**A. CLASSIFICATION OF SUBJECT MATTER**

H04W 24/00(2009.01)i

According to International Patent Classification (IPC) or to both national classification and IPC

**B. FIELDS SEARCHED**

Minimum documentation searched (classification system followed by classification symbols)

H04W; H04Q; H04M; H04L

Documentation searched other than minimum documentation to the extent that such documents are included in the fields searched

Electronic data base consulted during the international search (name of data base and, where practicable, search terms used)

DWPI; CNABS; VEN; CNTXT; WOTXT; EPTXT; USTXT; 3GPP; CNKI: 共享, 公共, 下行, 信道状态, 信息, 位置, 相同, share, common, downlink, csi, channel w state w information, location, same

**C. DOCUMENTS CONSIDERED TO BE RELEVANT**

| Category* | Citation of document, with indication, where appropriate, of the relevant passages | Relevant to claim No. |
|---|---|---|
| X | CN 105794256 A (LG ELECTRONICS INC.) 20 July 2016 (2016-07-20) description paragraphs [0138]-[0185] | 1-38 |
| A | CN 107148763 A (INTEL CORPORATION) 08 September 2017 (2017-09-08) entire document | 1-38 |
| A | CN 101686077 A (DATANG MOBILE COMMUNICATIONS EQUIPMENT CO., LTD.) 31 March 2010 (2010-03-31) entire document | 1-38 |
| A | US 2019296854 A1 (NEC CORPORATION) 26 September 2019 (2019-09-26) entire document | 1-38 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **01 July 2021** | **29 July 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/125680**

| Patent document cited in search report | | | Publication date (day/month/year) | Patent family member(s) | | | Publication date (day/month/year) |
|---|---|---|---|---|---|---|---|
| CN | 105794256 | A | 20 July 2016 | CN | 105794256 | B | 04 June 2019 |
| | | | | US | 2017310375 | A1 | 26 October 2017 |
| | | | | US | 9973253 | B2 | 15 May 2018 |
| | | | | WO | 2015084094 | A1 | 11 June 2015 |
| CN | 107148763 | A | 08 September 2017 | WO | 2016085608 | A1 | 02 June 2016 |
| | | | | US | 2016149628 | A1 | 26 May 2016 |
| | | | | CN | 107148763 | B | 17 November 2020 |
| CN | 101686077 | A | 31 March 2010 | CN | 101686077 | B | 03 October 2012 |
| US | 2019296854 | A1 | 26 September 2019 | JP | 2019169838 | A | 03 October 2019 |

Form PCT/ISA/210 (patent family annex) (January 2015)